# EUROPEAN PATENT SPECIFICATION

(11) **EP 3 488 206 B1**
(45) Date of publication and mention of the grant of the patent: **17.03.2021**
(21) Application number: 17729188.7
(22) Date of filing: 21.04.2017
(51) Int. Cl.: G01K 13/08

(54) **DEVICE FOR MEASUREMENT OF TEMPERATURE OR OTHER PHYSICAL QUANTITIES ON A ROTATING ASSEMBLY WHERE THE TRANSMISSION OF SIGNAL AND ENERGY BETWEEN ROTATING AND STATIONARY PARTS IS ACHIEVED BY MEANS OF CONTACTLESS TRANSMISSION**
VORRICHTUNG ZUR MESSUNG DER TEMPERATUR ODER ANDERER PHYSIKALISCHER QUANTITÄTEN AUF EINER ROTIERENDEN BAUGRUPPE, IN DER DIE SIGNAL- UND ENERGIEÜBERTRAGUNG ZWISCHEN ROTIERENDEN UND FESTEN TEILEN MITHILFE VON KONTAKTLOSER ÜBERTRAGUNG ERZIELT WIRD
DISPOSITIF DE MESURE DE LA TEMPÉRATURE OU D'AUTRES GRANDEURS PHYSIQUES SUR UN ENSEMBLE TOURNANT DANS LEQUEL LA TRANSMISSION DES SIGNAUX ET DE L'ÉNERGIE ENTRE LES PARTIES TOURNANTES ET LES PARTIES FIXES EST OBTENUE PAR TRANSMISSION SANS CONTACT

(30) Priority: 22.07.2016 HR 20160924
(43) Date of publication of application: 29.05.2019
(73) Proprietor: University of Zagreb Faculty of Electrical Engineering and Computing, 10000 Zagreb (HR)
(72) Inventor: DZAPO, Hrvoje, 10000 Zagreb (HR); CIFREK, Mario, 10000 Zagreb (HR); STARE, Zoran, 10000 Zagreb (HR); KRAS, Dragutin, 42000 Varazdin (HR)
(74) Representative: Sucic, Tatjana
(86) International application number: PCT/HR2017/000004
(87) International publication number: WO 2018/015774

(56) References cited:
- GB-A- 2 122 757
- US-A- 4 242 666

## Description

### Technical Field of the Invention

The present invention relates to a broader area of contactless telemetry for measurement of physical quantities on rotating objects, specifically to temperature measurement of a dry clutch rotating part, or similar mechanical assemblies such as any rotating component of a motor, a disc brake, a rotating vehicle wheel, a rotating shaft, or any rotating mechanical element supported in a stator. The measured temperature is transmitted by means of a near electrical field from a rotating to a stationary side of a system, while the measurement module on the rotating side is powered by energy harvested from a magnetic field generated on the stationary side of the system. The invention is specifically designed for applications where a space for installation of an electronic measurement module on the rotating side of the system is extremely limited, and where one of the main requirements is achieving the minimum dimensions of the system, with additional possibility for the system implementation by using electronic components that may be produced in extended temperature range.

### Technical Problem

Dry friction clutches are mechanical assemblies belonging to the category of connecting/disconnecting clutches enabling engaging or disengaging the transmission of rotating movement power from a driving to a driven system, wherein the driving and the driven system in case of a disengaged clutch (i.e. when there is no power transmission) in general have different rotational speeds. Transmission of a torque is achieved by means of frictional force between at least two discs under the influence of normal force. The control of normal force enables gradual increase/decrease of the torque transmission, and consequently a certain degree of slip, which results in a gradual speed equalization between driving and driven elements when connecting the clutch, and gradual slowdown of a driven element when disconnecting the clutch.

Measuring the temperature on a frictional surface of the dry clutch rotating element can provide useful information that can be used for the clutch condition monitoring, fault prediction, optimization of algorithms for drivetrain elements control etc. The information obtained from a temperature measurement system can be useful in two basic application scenarios, namely in a prototype vehicle models testing, and for installation of the temperature measurement system in a high volume vehicle production. While in case of the prototype vehicle models testing it is acceptable to substantially modify a clutch mechanical design in order to install additional sensors and measurement systems for testing the working conditions and performance of the clutch, in the high volume production any additional sensors and measurement systems must have a minimum impact on the clutch mechanical design, and all measurement elements must be able to be accommodated in an extremely small space and have a small mass, in order to avoid the unwanted influences on the clutch mechanical design and the balance of its rotating part, while at the same time achieving the best temperature measurement characteristics and accuracy.

Indirect methods of estimation of a clutch rotating element temperature usually used in currently known practice are not as reliable and accurate as actual direct measurements. Contactless methods for temperature measurement (such as use of contactless infrared temperature sensors or thermal cameras) are not acceptable in this application because there is no clear line of sight of points of interest for temperature measurement in realistic clutch mechanical assembly implementations. Therefore, it is important to enable a direct temperature measurement directly on a clutch rotating element by means of a temperature sensor attached to the clutch rotating element, which transmits the information about the measured temperature to the stationary part of the system by means of the contactless telemetry approach.

The clutch temperature can be measured by employing different sensor types, implemententing either an active or a passive approach to the temperature measurement. The active temperature measurement approach implies that a signal from sensor is processed by means of a dedicated active electronic device, which moreover transmits the information about the measured temperature to the stationary part of the system. The passive temperature measurement approach does not require active electronic components for processing a signal from sensor because the temperature is deduced from a change of temperature dependent circuit element parameter (capacitance or inductance), and that change is sensed by contactless technique on the stationary part of the system.

Passive contactless readout of a circuit element parameter change can be achieved e.g. by detection of a circuit resonant frequency change, as a result of temperature dependence either of dielectric constant or magnetic permeability in a LC circuit. The advantage of passive temperature measurement is a relatively simple circuit implementation, because there is no active electronic module on a rotating side, and consequently no problem with potentially high temperatures that would limit the operation of active circuit electronic components. The disadvantages of passive temperature measurement are related to the problems of measurement accuracy, nonlinearity, repeatability, reliability, sensor implementation, need for use of special materials etc., and therefore these kinds of methods still have not been widely adopted massively in practical applications. Therefore, the present invention is based on the active approach to the temperature measurement on the dry clutch rotating element that provides better measurement accuracy and reliability. The invention is not limited to a temperature measurement only, it can be also applied for the measurement of other physical quantities.

The maximum expected temperature of the dry clutch rotating element frictional area which temperature is measured at real operating conditions (e.g. in vehicles) is approximately up to 250 °C, however under fault conditions or in case of irregularities even higher temperatures are expected to be measured, approximately up to 350 °C. A distribution of the temperature in the dry clutch rotating element is such that it is typically possible to identify the parts where the lower temperature than above said is expected (usually up to 125 °C), but the temperature can under unfavorable conditions go to much higher values, up to approximately 200 °C. Therefore, it is beneficial to place the temperature sensor for measuring the temperature of the dry clutch rotating element frictional area at place where the highest temperatures must be measured while said sensor itself is wired towards an active electronic module which is placed or installed in a part of the rotating element where the lowest working temperature is expected, and where under the most unfavorable conditions the temperature does not exceed values above the temperature range of active electronic components used in a measurement circuit implementation.

A specific challenge for the direct temperature measurement on the dry clutch rotating element represents an extremely limited space for installation of a temperature measurement telemetry module that must ensure a minimum impact on the clutch mechanical design and a rotating part balance, i.e. without affecting the function of the rotating element. An electronic measurement module must enable temperature measurement and reliable operation in highly demanding working conditions, said working conditions include high ambient temperature, high shocks and vibrations as a result of acceleration or deceleration of mechanical rotational system, high rotational speeds, dirty environment, high electromagnetic interference environment etc. Such environmental conditions substantially limit the choice of components and technologies that can be used for measurement system implementation, which must work reliably in realistic applications. It is specifically challenging to provide a sufficient amount of energy for contactless power supply considering the principal requirement for achieving the minimum dimensions, what makes more difficult to implement inductive coupling solution for the contactless energy transmission.

A signal transmission in tightly coupled telemetry systems can be achieved either by means of inductive or capacitive coupling. Although the most of telemetry systems for measuring the parameters on rotating elements use the inductive coupling for the signal transmission, such approach due to the requirement for relatively high currents in a signal transmission coil has negative impact on the power consumption. Capacitive coupling is more advantageous regarding the energy requirements, because information is transmitted by means of voltage-controlled electrodes in an opened circuit, what enables a minimum power consumption under the assumption of small electrode capacitance and relatively small signal carrier frequency. The measurement system power consumption is directly related to the energy that must be transmitted and received using contactless technique, and that energy is also in direct relation to physical dimension of an energy harvesting coil on the rotating element. In order to achieve minimum receiving coil dimensions and minimum mass of the measurement module on the rotating element, it is necessary to ensure sensor module power requirements in a range of microwatts or milliwatts, and working with voltages of very low levels, from few tens or hundreds of millivolts or more.

An additional challenge represents a high environmental operating temperature at which the electronic module must operate reliably, which temperature in real conditions can be higher than 125 °C. The temperature of 125 °C is an upper nominal limit for standard electronic components (automotive grade components), because for temperatures higher than 125 °C only special purpose components are produced (for extended temperature range), and the choice of such components is very limited (such components can be found in the range of up to 230 °C, depending on the technology implementation). In case of an active temperature measurement approach under such conditions it is necessary to ensure such measurement module concept that it can be implemented also by using a limited choice of components from the extended temperature range, and adapt it even for temperature ranges up to 200 °C, what is in turn an upper expected temperature limit for a colder part of the clutch rotating element in practical applications under the most unfavorable conditions.

The existing telemetry solutions and implementations of systems for measurement of temperature and other parameters on rotating elements do not provide a technical solution that enables operation of the measurement module in an environment with temperatures of up to 200 °C, with minimum dimensions of telemetry module on the rotating side of a system, by achieving the power consumption in range of microwatts or milliwatts, and using small coils for power transmission by means of inductive coupling, getting power supply from small levels of voltage on a rotational side of a system (secondary side) from few tens or few hundreds of millivolts or more, what is important to achieve a minimum spatial requirements for a module installation, and minimum mass that has a negligible impact on the balance of rotating component.

First objective of the present invention is to ensure minimum dimensions of a telemetry measurement module installed on the rotating element, by achieving the minimum power consumption at the same time.

Second objective of the present invention is to implement a device that ensures high accuracy of measuring the temperature or other physical parameters on a rotating friction surfaces of rotating elements, or other kinds of rotating elements.

### Description of the Related Art

Due to the difficulties described in previous chapter, for determination of a dry clutch friction surface temperature, indirect methods of temperature estimation are typically used. The main difficulties are very limited space for telemetry measurement module installation on a rotational side of a system, need for operation in high temperature environment, additional unfavorable working conditions such as shock, vibrations, electromagnetic interference etc. Indirect methods of temperature estimation are based on measuring the other, more accessible physical quantities (such as oil temperature), from which a temperature of rotating component of the dry clutch is estimated.

US Patent No. 5,723,779 published on 3.3.1998. describes a system for determination of a residual life of a friction clutch that employs an approach of indirect measurement of the clutch temperature by measuring the temperature of a working fluid used to generate a clutch engaging force. Although such indirect methods do not provide accuracy and reliability of information about the actual temperature like direct measurement methods, they are employed in practical applications mostly because the existing approaches to temperature measurement of dry clutch rotating element in realistic conditions do not accommodate needs for limited space and mass acceptable for installation in real systems in the mass production.

Passive temperature measurement approach is based on a principle of change of the LC circuit resonant frequency due to the temperature dependence of a dielectric material permittivity (capacitance) or permeability of magnetic core (inductance). Passive approach to the temperature measurement does not require power supply for sensor because the readout can be performed by monitoring the frequency of oscillations of excited LC resonant circuit, which resonant frequency changes with temperature. An example of passive contactless temperature measurement on rotating objects is described in US Patent No 8,256,954 B2. The document US 8,256,954 B2 describes a contactless device for measuring the temperature of a rotor that exploits the fact that some materials lose their permanent magnetic properties under the influence of temperature. Although the passive temperature measurement approach gives a possibility for simpler and relatively compact measurement system implementation, and inherently lower negative influence of high environmental temperatures in comparison with active temperature measurement approach (that needs electronic device with power supply), such approach still has not been widely adopted because of significantly worse measurement characteristics of inductive (L) and capacitive (C) temperature sensors, compared with standard industrial temperature sensors, such as RTD sensors or thermocouples.

The change of permittivity or permeability of the LC resonant circuit components with temperature has shortcomings related with the measurement accuracy, measurement uncertainty, linearity of parameters temperature dependence, repeatability of characteristics and statistic distribution of nominal sensor parameters, sensitivity, signal-to-noise ratio, resolution, influence of coupling media for energy and signal transmission to the measurement results, influence of parasitic reactive components (e.g. change of capacitance or inductance that is not related with temperature change and that can be superposed to measurement signal) etc. Due to all reasons stated above, one can conclude that the methods based on passive approach to the temperature measurement can only partially solve a technical problem because these methods do not provide a quality of measurement comparable with standard temperature sensors used in industrial environmental conditions.

For measurement of physical quantities on rotating elements, depending on the application, measurement quantity, and environmental conditions, different approaches to the overall telemetry solution are employed. In closely-coupled telemetry systems, where the transmitter and receiver are very closely positioned relatively to each other and where the space between them is filled with metal mechanical components, the signal transmission by means of electromagnetic (EM) wave propagation (radiofrequency (RF) communication) is generally not used, because of the small distances in comparison to the wavelength, and the problems with attenuation and reflection of EM waves in the presence of metallic objects. Additional problem may represent a need for ability of a measurement system to work in an environment in the extended temperature range because it is difficult to find electronic components for RF communication in this range, and the components themselves are not particularly suitable for applications where greater mechanical stress and vibration are expected, with an additional disadvantage of relatively high power consumption of systems that operate at high frequencies. In permanent installations for continuous temperature measurement and monitoring, the use of batteries for measurement module power supply is not acceptable, especially in environments with high operating temperatures, and it is therefore necessary to provide a power for rotating side of the system by means of contactless power transmission. Contactless power transmission can be achieved by energy transmission from the stationary part of the system to the rotating element by means of the inductive coupling, or by using some other energy harvesting approach, where the system is powered e.g. from the energy of vibrations (piezoelectric transducers, magneto-mechanical resonators), the temperature difference (thermoelectric transducers) and similar.

In closely-coupled telemetry systems the transmission of the measurement information is implemented by means of near-field communication, where the signal is transmitted either by means of inductive or capacitive coupling. The existing telemetry solutions on rotating objects mostly use the inductive coupling for measurement information transmission, where it is necessary to have a transmission coil on a rotating element, and the receiving coil on a stationary part of the system. The document WO03/021839A2 published on 13.3.2003. describes a method for contactless data transmission by inductive coupling. Furthermore, the document DE4021736A1 published on 5.12.1991. describes a device for measuring and monitoring the temperature of the friction surfaces of a frictional clutch, where the measured results are reliably transmitted from the inside of the clutch by means of the inductive coupling. In general, the main advantage of measurement data transmission by means of the inductive coupling is the immunity to noise and environmental influences, which makes it a more favorable choice over the capacitive coupling in many practical applications. The disadvantage of inductive coupling data transmission is higher power consumption because it is necessary to provide relatively high current through the transmitter coil in order to produce a sufficiently high magnetic field necessary for good signal reconstruction on the receiver side of the system. The higher is the current through the data transmitter coil, the more energy must be transferred from the stationary to the rotating part of the system, which results in larger dimensions of the receiving coil on the rotating part of the system, and subsystems for power supply in general. In cases when a highly limited space for system installation is not the main parameter by which the system design is optimized, the benefits of the inductive telemetry over the capacitive approach justify the choice.

In the case when the objective is to achieve the minimum possible power consumption in order to reduce dimensions and mass of the system for the contactless power transfer or energy harvesting from the environment, the current that must be injected into the transmitter coil at the rotating side of the system has an adverse impact on rotating side electronic module power consumption, and systems based on inductive coupling for data transmission are not an optimal choice considering their capabilities for achieving ultra-low power operation. The capacitive telemetry approach is able to achieve significantly lower power consumption because the electrodes are driven by the voltage source in an open circuit, where the level of currents charging and discharging coupling capacitances between rotational and stationary sides of the system can be controlled by the capacitance value depending on the electrodes geometry, frequency and amplitude of driving signal. An example of capacitively coupled transmitting data telemetry system is disclosed in document EP2782262A1 published on 24.09.2014. Furthermore, the document US4242666A published on 30.12.1980. discloses contactless data acquisition system for collecting data from rotating machinery which uses the capacitive coupling for data transmission and the inductive coupling for power supply of circuitry at the rotary part of the machine. Capacitive telemetry is used less often than inductive because of some disadvantages: sensitivity to electric field interference from close sources of interference, sensitivity to the impact of dirt or small objects that may be present in the space between transmitter and receiver electrodes, sensitivity to interference due to different reference electrical potentials of electronic modules that may be present between a rotating and a stationary part of the system when galvanic connection between different parts of mechanic assembly is poor and so on. Better performance and characteristics of data transmission using capacitive coupling and lower susceptibility to interference can be achieved by using the principle of differential capacitive transmission. The principle of differential capacitive transmission facilitates the suppression of common-mode noise influence, either when this noise is caused by unwanted sources of an electric field or when it is a consequence of the potential diffecence between the reference points of the circuitry on the transmitter and the receiver side of the system, because the received useful signal is processed by means of a differential amplifier or some other similar electronic circuit. GB 2 122 757 A discloses a temperature and pressure sensor for a tyre of a car, wherein the signal is transmitted by means of differential capacitive coupling between two pairs of electrodes. It is important to emphasize that the principle of differential capacitive transmission is not always applicable because it requires a particular mutual arrangement of electrode pairs. The existing solutions related to the technical problem of contactless temperature measurement on rotating objects do not emphasize the advantage of using a differential capacitive coupling over the inductive telemetry approach in order to achieve a minimum power consumption with the objective to minimize dimensions of the contactless power supply subsystem, while still reaching satisfactory noise immunity levels to various sources of interference and relatively reliable transmission of information, with characteristics comparable with similar designs based on the inductive telemetry. The applicability of this method for signal transmission has not been recognized and proposed for rotating elements yet, where a small part of a rotational circumferential profile could be used to form a system of differentially coupled capacitances during a short time interval, and where that system configuration would allow a robust telemetry signal transmission with better performance and characteristics compared to the asymmetric capacitive telemetry, with the objective to achieve the minimum dimensions and power consumption of the telemetry system on a rotating side, which is proposed by the present invention. Differential capacitive coupling for data transmission proposed in the present invention achieves high noise immunity in signal transmission path (significantly better than for the case of asymmetric capacitive transmission because the signal at the receiver side is processed by means of differential amplifier, which suppresses the common-mode noise caused by the electric fields from nearby voltage sources, what cannot be achieved by asymmetric implementation), and high noise immunity to the interference between reference points (grounds) of electrical circuits on a rotating and a stationary side of the system (what is especially important for rotating mechanical systems where the electrical connection between the two sides of the system may be poor and when significant potential differences between the two grounds can be present). Differential capacitive coupling for data transmission proposed in the present invention also achieves a minimum power consumption for telemetry system (lower than the inductive telemetry for comparable signal-to-noise ratio) and minimum dimensions (which is e.g. a key requirement in the application to temperature measurement of the dry frictional clutch).

The approach of inductive contactless power supply for electronic measurement modules is widely used for measurements on rotating objects. Inductively coupled power transmission in telemetry systems implies a need for both a transmitting and a receiving coil, which can be coupled via magnetic field continuously or intermittently (during the rotation of mechanical elements). A transmitting coil (primary side) is typically powered from an AC power source, and the AC voltage induced on a receiving coil (secondary side), according to the working principle of transformer, is rectified and regulated to obtain a DC voltage needed for electronic components power supply. The voltage induced in the secondary side coil depends on the number of turns and the surface of the loop, which directly affects the dimensions and mass of the electronic module on a rotating side. The efficiency of energy transfer can be optimized by using the principle of resonant circuit, where it is important to tune the circuit parameters correctly in order to achieve the resonance. Instead of the primary coil with AC excitation, it is possible to use permanent magnets on the stationary side where the change of the magnetic flux in the secondary coil is achieved by moving the secondary coil through the magnetic field of the permanent magnet during rotation.

Most of the existing solutions for inductive telemetry on rotating objects are not optimized to work with very small voltages and power levels. The existing solutions typically require voltage levels of an order of volts on the rotating side in order for power supply circuit to operate. Such voltage levels are needed to compensate for the voltage drop on the rectifier elements, to achieve a sufficiently high input voltage and reserve when using linear regulators, and to achieve sufficient voltage for input for DC-DC converters. DC-DC converters are suitable choice in applications where it is necessary to provide power supply with high efficiency and small losses, or when it is required to convert an input DC voltage to a higher value. DC-DC converters are not typically designed to operate from very small input voltages and very small amounts of energy, but in these cases, they can be used in the special function implementations, optimized for energy harvesting applications. Such special function energy harvesting DC-DC converters, optimized for operation from very small input DC voltages and small amounts of energy, can be directly connected to weak energy sources, such as piezoelectric, thermoelectric, photovoltaic and similar transducers. Although piezoelectric transducers do not produce DC voltage, due to the relatively high voltage pulses on their outputs, they can be connected to a specially designed energy harvesting DC-DC converters that have built-in rectifier and overvoltage protection.

Minimization of the loop surface and the number of turns of the receiving coil for collecting the energy from the time-varying magnetic field also reduces a peak value of the induced AC voltage at the energy receiving coil. The peak of the induced AC voltage must not fall below some minimum value required for proper operation of the power supply circuitry. The objective is to realize the power supply circuitry operable from the lowest possible input operating voltages (preferably in the range of tens or hundreds of millivolts), induced at the receiving coil for collecting the energy from magnetic field, in order to minimize the overall dimensions of the contactless power supply subsystem.

A review of prior art has shown that the company Linear Technology produces energy harvesting DC-DC converters that can work from a small DC input voltages from 20 mV and more, using the principle of self-oscillating circuit with transformer to increase a very small input DC voltage to higher values needed to power up the rest of the circuitry. Such DC-DC converters are specifically designed for direct connection to the energy harvesting sources with DC output (solar panels, thermoelectric elements etc.) and this approach cannot be applied to connect DC-DC converter directly to the AC output of the small coil for magnetic energy harvesting. Companies Linear Technology and Texas Instruments also produce DC-DC converters that do not use a self-oscillating circuit with transformer to raise the input voltage, said converters operate directly from low input DC voltages from 200 to 300 mV. In the latter case, it is necessary to provide an input AC voltage of significantly higher amount, sufficiently high to compensate the voltage drop on the rectifier element (about 0.7 V for standard small-signal diode, or about 0.3 V for Schottky diode).

It is also important to note that special function energy harvesting DC-DC converters are not currently produced for the extended temperature range (outside of the automotive temperature range of 125 °C), what furthermore limits the application of such specific integrated circuits. However, the company Texas Instruments currently manufactures DC-DC converters designed for the extended temperature range (up to 230 °C), but they require higher input voltages for their operation (few volts or more).

The present invention provides a configuration of inductively coupled power supply subsystem that enables use of very small energy collected by a receiving coil on a rotating side of a system, where the small amount of the induced AC voltage is capable to supply either a special function energy harvesting DC-DC converter, optimized for input DC voltages from few tens to few hundreds of millivolts, or a DC-DC converter with standard input voltage levels of an order of volts, which can be found in the extended temperature range up to about 200 °C. Such concept provides a technical solution for a power supply subsystem whose dimensions and mass are significantly lower and more compact than the state-of-the-art similar solutions, with an important possibility that such approach can be further realized with electronic components that are also available in the extended temperature range up to about 200 °C.

The prerequisite to implement the described concept of a measurement module miniaturization is to achieve the ultra-low power consumption of a measurement module, in microwatt or milliwatt range. This objective can be achieved by optimizing the power consumption for data transmission by using low-frequency capacitive signal transmission (preferably differential, to achieve noise immunity characteristics comparable to inductive transmission), and to realize a design of the temperature measurement part of the system, temperature conversion into a frequency modulated (FM) signal, and data transmission by using differential capacitive coupling also with ultra-low power consumption requirements. It should be taken into account that the system should be realizable by using electronic components also available in the extended temperature range up to 200 °C, which excludes the use of processors and complex integrated circuits which are typically not available for temperature ranges above 125 °C, and which can significantly degrade the ultra-low power consumption requirements.

Temperature-to-frequency conversion circuitry can be most simply implemented by using the oscillator, which frequency changes with a temperature dependent resistor. Such an approach may be accomplished by using the standard industrial RTD sensors, which can be easily connected to an oscillator that converts the temperature into the frequency, which is transmitted to the stationary part of the system via capacitive coupling. A resistor controlled oscillator by can be easily realized in an ultra-low power implementation. The use of thermocouples as an alternative solution for reliable and accurate temperature measurement is not an acceptable solution in this case due to the complex implementation of cold-junction compensation and because such sensor does not allow an easy implementation of ultra-low power temperature-to-frequency converter.

Alternatives to the inductive coupling contactless power supply for the measurement module on a rotating side of the system are different possibilities and approaches for energy harvesting. However, in the context of the described technical problem, the other possibilities and approaches for energy harvesting from the environment cannot generally obtain sufficient levels of energy for electronic module operation. The approach of collecting the energy from vibrations by means of the piezoelectric transducer provides a negligible energy levels due to the relatively small vibration amplitudes, and the energy must be collected throughout relatively long periods of time. In addition, the use of piezoelectric transducers requires a good match between vibration frequencies and a transducer mechanical resonant frequency in order to absorb the largest amounts of energy, which is a practical problem in implementation of such an approach. The approach of collecting the energy by a thermoelectric element from the temperature difference also gives a negligible energy levels, with an additional problem of finding a suitable place for mounting the thermoelectric element with a sufficient local temperature gradient, which is difficult to achieve in the case of the described technical problem. The approach of collecting the energy from the mechanical resonator with a coil and a permanent magnet is not a suitable solution because of the installation complexity and the need for higher levels of vibrations in order to collect satisfactory energy levels. The power supply based on the photovoltaic effect is also not a suitable choice because of the sensitivity of photocells in the harsh conditions of the high temperature and vibrations which are expected in realistic applications, as well as possibility of obscuring the optical visibility due to impurities and small objects that can prevent the transmission of energy.

The examination of the state-of-the-art lead to the conclusion that it is possible to propose novel and better concept for solution of the technical problem of temperature measurement on a rotating element of a dry clutch, which would allow smaller dimensions comparing to the existing solutions for installation in applications where the minimum dimensions and mass of the system are of the crucial importance, with high temperature measurement accuracy and possibility of hardware implementation in the extended temperature range in about up to 200 °C. The proposed invention solves the technical problem in a better way than previously known solutions in the prior art

### Summary of the Invention

The present invention solves the technical problem of direct measurement of temperature or other physical quantities on a rotating element such as e.g. a dry friction clutch rotating element, where it is necessary to provide a contactless telemetry signal and power transmission between rotational and stationary parts of a system, wherein the particular challenges are extremely small space available for installation of an electronic module on a rotating side, high operating environment temperature, and requirement for high accuracy of temperature measurement.

Energy received on the rotating side is used to provide power supply for a sensor, a sensor signal processing circuitry, a circuitry for data transmission, and a power supply regulator circuitry.

Since a limited space for installation of the electronic module for measuring the temperature of the dry friction clutch rotating element is of the utmost importance, a device according to the present invention implements a method of measurement, signal processing and data transmission to allow for a minimum power consumption, and consequently, a minimum dimensions of the system, which makes the device according to the present invention a more suitable solution for installation comparing to the state of the art systems and devices in applications where minimum possible dimensions of the system must be achieved. The invention proposes the power supply for sensors and electronic circuitry on a rotational side of the system provided by means of contactless power transmission from the source on the stationary side of the system.

Embodiments of the present invention provide a measurement assembly arranged on the rotational side which comprises a resistance temperature detector (RTD) sensor, one or more frequency (FM) modulators, differential capacitive signal transmission, and power supply that receives the energy from the magnetic field generated on a stator side, based on use of DC-DC converters which can be powered by small voltage levels obtained from the energy receiving coils. Below it will be explained how each of the elements stated above participates in the minimization of power consumption and dimensions of a rotor side measurement module, and how the proposed concept can be used in the extended temperature range.

RTD sensors allow easy implementation of temperature measurement systems with high accuracy, and they can be connected directly to the FM modulator so that change of the modulator frequency directly depends on the temperature that the sensor measures. The one or more FM modulators can be implemented either in discrete or integrated circuits technology, provide very low power consumption, and, due to the fact that it is not necessary to use microprocessors or complex digital components, such modulators can be designed by using the extended temperature range electronic components, that operate in the range above 125 °C, even in some cases above 200 °C, which is important for this application.

The existing related telemetry solutions for measurements on rotating mechanical assemblies transmit the signal by means of inductive or capacitive coupling to the receiving side of the system. The inductive coupling for measurement information transmission is used by majority of such systems. The advantage of the information transmission by inductive coupling is a greater noise immunity and immunity to the environmental influences, compared to the capacitively coupled transmission, which is the reason why the capacitive coupling is not used in practice as often as the inductive coupling. However, a disadvantage of the inductive coupling method is the higher power consumption compared to the capacitive coupling, since it is necessary to provide a substantial current through the inductive wire loop to achieve a sufficiently high magnetic field for quality signal reconstruction at the receiver side. Consequently, it is necessary to transfer more power to the rotary part of the system, which increases the dimensions of the power receiving coils and the system at the rotary side as a whole. In most applications where the extremely limited space for electronic module installation is not of a crucial importance, the benefits of the inductive telemetry compared to capacitive justify such a choice. On the other hand, the capacitive telemetry can achieve a significantly lower power consumption because the electrodes are driven by a voltage source in an open circuit, where the currents flowing due to the charging and discharging of coupling capacitances between the rotating and the stationary side of the system can be controlled by the value of coupling capacitance (which depends on the electrodes geometry), frequency and amplitude of the signal.

Most of capacitively coupled telemetry systems use an asymmetrical capacitive coupling approach because of ease of implementation, where a transmitter side electrode is driven by a voltage source, receiver side electrode receives a signal through the coupling capacitance, and the electrical circuit is closed via the environment. Although such capacitive coupling design offers a simple solution for telemetry signal transmission, depending on the system design and character of the information being transmitted, some of the following problems can occur: high interference and noise caused by the electric fields generated by nearby voltage sources (because the receiving electrode is susceptible to that kind of interference, especially considering the high input impedance of the detector circuit), the occurrence of impurities or objects in the space between the transmitter and the receiver electrode can degrade the characteristics of communication channel due to dynamic change of permittivity in the space between electrodes (which may introduce additional interferences), between objects or the rotating and stationary side the noise voltage can be superposed to the useful signal if the galvanic connection between reference potentials on both sides of the system is not good etc. Due to the all stated reasons, the capacitive signal transmission is usually avoided In practice as it Is considered a less reliable solution in comparison to the inductive coupling approach.

Differential capacitive signal transmission is a special implementation of the capacitively coupled communication that transmits the useful signal by modulation of the electric field in a particular manner. In this particular approach to the capacitive coupling communication certain conditions must be met. The first condition is that a pair of transmitting electrodes is driven by a differential voltage source. The second condition is that a pair of receiving electrodes is positioned very closely to the pair of transmitting electrodes, and that the corresponding electrode pairs on the transmitting and receiving side have a good positional overlap, in order to maximize the mutual capacitances between corresponding electrodes in pairs and minimize mutual capacitances between the electrodes of the opposite polarity. On the other hand, the asymmetric capacitive coupling approach does not pose such requirements, which is the reason why such approach is easier to implement in practice. Due to the need for specific configuration of electrodes layout, the differential capacitive transfer as the method can be used only in special cases, when it is possible to arrange the corresponding transmitting and receiving electrode pairs close to one another, which is not the case for most practical applications. Embodiments of the present invention provide minimization of the dimensions of the power supply subsystem for powering the sensor and electronic circuits on the rotating side of the system by using a small coil for receiving energy from the magnetic field, and by using the low power voltage regulator that can be powered from a small AC voltage obtained at the rotating side of the system. Power supply from the energy of the magnetic field is based on the principle of magnetic induction due to the changes in magnetic flux within the area encompassed by the coil. Considering that the voltage induced across the energy receiving coil and the energy transferred by means of the magnetic coupling are proportional to the area of the loop and the number of turns in the coil, the objective is to enable the proper system operation with a minimum number of turns and the minimum coil loop area. The induced AC voltage across the energy receiving coil must be converted to the DC voltage in order to provide power supply for electronic circuits.

Passive rectification of AC voltage (e.g. with diodes in Graetz bridge rectifier) and the use of linear regulators represents one approach for implementation of the power supply, whose shortcoming is a need for relatively high input voltage from the energy receiving coil due to the need for compensation of the voltage drop on the rectifier elements and linear regulator. In such configuration, it is not possible to boost the output of the regulator above the input voltage level and it is necessary to ensure that the average value of the rectified input voltage from the coil is always higher than a power supply voltage for sensor and electronic circuits on a rotating side of the system.

Embodiments of the invention propose as a more favorable solution the use of DC-DC converters that can be powered from small voltages from the coil on the rotating side of the system. DC-DC converters are able to produce higher output voltage than the input voltage (in the boost topology), while at the same time achieving higher efficiency than linear regulators, thus allowing more efficient usage of energy, which consequently leads to less losses and smaller dimensions of the contactless power supply subsystem. The specificity of this application is a need for operation from AC voltage across the receiving coil as a result of magnetic induction, with an additional possibility of low AC voltage peak levels, ranging from a few tens to a few hundreds of millivolts, when the small space-saving coils are used. DC-DC converters cannot be directly connected to AC voltage sources, and most of them are not designed to operate with such small input voltage levels.

Embodiments of the present invention provide two possibilities how to exploit the good properties of the DC-DC converters, such as high efficiency and ability to boost the input voltage, in case when the AC voltage across the receiving coil for collecting the magnetic field energy is very low because of requirement for a very small system dimensions: by using a special voltage transformer after the energy receiving coil, and by using the special function DC-DC converters, optimized to operate from low input voltages and for energy harvesting applications.

By placing a miniature transformer in a surface-mount technology (SMT) case behind the energy receiving coil the AC voltage across the coil can be raised to a higher level before DC-DC converter input, without a significant increase in dimensions and volume of the electronic system on the rotational side. Such transformers are typically used for implementation of compact DC-DC converters with galvanic isolation and they are available as off-the-shelf components. In cases when due to the space constraints it is not acceptable to increase the loop area and the number of turns of the coil for collecting the energy from magnetic field, which results in low voltage values across the coil, with this method it is possible to significantly raise the input voltage at the DC-DC converter input, which facilitates the use of standard electronic components and increases the choice of acceptable components for implementation of the overall solution by bringing the input voltage levels to the higher operating values.

Another possibility is to use special function DC-DC converters, optimized to operate from low input voltage levels and for energy harvesting applications. Currently, there are several solutions available on the market which can operate with minimum voltages in the range from tens of millivolts to hundreds of millivolts and that can boost the value of the input DC voltage. The problem with these special function DC-DC converters optimized for energy harvesting applications is that they are optimized for DC input voltages in the range of at least 20 mV or more, in cases when as an energy source a thermoelectric element or a solar panel are used. In both cases, the power source at the input of the DC-DC converter is a DC voltage source, and not an AC voltage source as in the case of the technical problem which this invention is related to. In this case, when there is a small AC voltage across the energy receiving coil, it is possible to combine rectifiers with a small voltage drop (e.g. Schottky diodes) and special function energy harvesting DC-DC converters operating from low voltage DC inputs, in order to achieve power supply subsystem based on this combination, with smaller expected dimensions comparing to the existing solutions based on linear regulators or classic DC-DC converters, which are not optimized to work with very low energy levels encountered in energy harvesting applications. The existing solutions do not emphasize the benefits of using these special function DC-DC converters in applications where the rotating mechanical components must collect the energy from the magnetic field and when the voltage source at the input of voltage regulator is an AC source, and not a DC source as in most cases of energy harvesting applications. The invention proposes the use of small coils, rectifiers with a small voltage drop, and DC-DC converters optimized for operating from low DC voltage levels (of an order of tens or hundreds of millivolts and more) as a solution that can further minimize the dimensions of the system, with an additional possibility of adding previously described voltage transformer in case of very low induced AC voltage levels across the energy receiving coil.

An important practical problem that must be taken into account when measuring the temperature of the dry frictional clutch is the temperature range to be measured in the test points and the range of environmental temperatures in which the electronic system on a rotating side must operate. In a normal operational mode, the temperature in testing points on the dry clutch on the rotor side may be up to 250 °C, and in case of anomalies or irregularities the expected temperature may rise to 350 °C or more. It is not possible to use electronic components that would operate in such a high temperature range. However, such high temperatures are not expected on the whole rotating part of the mechanical dry friction clutch and at the outside part of the mechanical element the temperature may be significantly lower than the maximum, due to the temperature gradient inside the body of the rotating mechanical component. The minimum temperature over the whole body of the mechanical rotating element in most cases does not exceed 125 °C, which means that in such cases electronic modules that must be installed on the rotating side of the system may be realized by using standard electronic components from the automotive temperature range from -40 °C to 125 °C. However, in certain situations, depending on the maximum operating temperature of a dry clutch and a method of heat transfer, the temperature at the periphery of the rotating element can go above the critical limit of 125 °C and reach values of up to 200 °C, and under such conditions it is not possible to realize electronic circuits by using standard components. For extended temperature range from 125 °C to 230 °C a special function electronic components are manufactured, but the selection of these components is very limited. Most of standard electronic components are not available in the extended temperature range, primarily complex analog and digital circuits, which makes systems based on microprocessors and other complex analog and digital circuits usually unfeasible in technology available for the extended temperature range. The solution proposed by the present invention from the viewpoint of required electronic components (FM modulator, amplifier for differential signal transmission, and the power supply system) is feasible in the extended temperature range, which makes the solution applicable even in cases when it is necessary to ensure the operation of the rotating side circuitry in the extended temperature range. The stationary side of the system can be implemented by using standard electronic components since the differential signal from receiving pair of electrodes can always be wired to places where the environmental temperature does not exceed 125 °C.

### Brief Description of the Drawings

The present invention will be described in details below, with the reference to the drawings wherein:
- Figure 1. shows a schematic diagram of a basic concept of a device described by the present invention,
- Figure 2. shows the installation of a measurement module on a rotary member according to an embodiment of the present invention,
- Figure 3. shows the installation of the measurement module on the rotary member according to another embodiment of the present invention,
- Figure 4. illustrates a schematic view of the measurement module,
- Figure 5. illustrates a schematic view of a measurement module power supply,
- Figure 6. illustrates a schematic view of a stationary electronic module
- Figure 7. illustrates a schematic view of a differential capacitive telemetry signal transmission, 1
- Figure 8. shows the preferred relative placement of the measurement and the stationary modules for an optimal magnetic coupling for contactless power supply,
- Figure 9. illustrates a schematic view of a multichannel measurement module for a time domain multiplex of FM signal,
- Figure 10. illustrates a schematic view of a FM signal waveform in a time domain multiplex, and
- Figure 11. illustrates a schematic view of a multichannel measurement module for frequency domain multiplex of FM signal.

### Detailed Description of the Invention

Embodiments of the present invention refer to a device for measuring temperature or other physical quantities on a dry clutch rotating element, a disc brake or other rotating elements where transfer of a signal and an energy between a rotating element 1 and a stationary part of a system 5 is realized by means of a contactless transmission. The contactless signal transmission is based on capacitive coupling, while a contactless power transmission is based on inductive coupling. The device comprises an electronic measurement module 3 configured to be attached to the rotating element 1, the measurement module 3 is adapted to process signal from one or more temperature sensors₁₋ₙ 2 configured to be attached to the rotating element 1, wherein temperature sensors₁₋ₙ 2 are connectable to the electronic measurement module 3; and a receiving stationary electronic module 4 mounted on the stationary part of the system 5 relative to which the element 1 rotates. The invention is not limited only to measurement of the temperature of the dry clutch rotating element, and instead of temperature sensors₁₋ₙ 2 the assembly may also use sensors measuring other physical quantities. Furthermore, the invention is not limited to the measurement of physical quantities on the dry clutch rotating element, but it may be also used on the disc brake, or any other rotating element.

The measurement module 3 comprises a pair of transmitting electrodes 8 adapted for a differential capacitive signal transmission, wherein the stationary electronic module 4 comprises a pair of receiving electrodes 14 adapted for receiving the differential capacitive signal from the pair of transmitting electrodes 8 in a time interval Tₘⱼ during which the measurement modules 3 and 4 are in a mutually parallel position one above the other.

The electronic measurement module 3 is positioned on a part of the surface of the rotating element 1, where said part of the surface has the lowest temperature in working conditions, wherein said electronic module 3 has dimensions which do not influence the function of the dry friction clutch. The electronic module 3 comprises one or more FM modulators 6; a differential driving circuit 7 which converts an asymmetrical signal into a differential (balanced) signal and controls the pair of transmitting electrodes 8 for differential capacitive coupling signal transmission; one or more receiving coils 9 for collecting the energy for power supply of the measurement module 3 via the magnetic field generated by the stationary electronic module 4, wherein said receiving coils 9 are installed directly under the pair of transmitting electrodes 8; a power supply circuit 10 for the measurement module 3; and a capacitor 11 that provides a power during the time when the electronic measurement module 3 and the receiving stationary electronic module 4 are not mutually coupled via magnetic field.

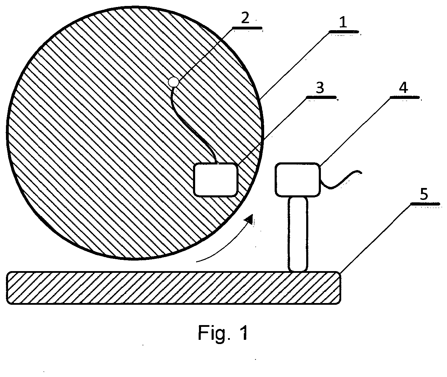

Figure 1 shows the concept of the invention with the main parts of the system. The temperature is measured on the rotating mechanical component 1 at the selected test point in which the temperature sensor 2 is mounted. The sensor 2 is wired to the measurement module 3 for measuring the temperature on the rotating component 1, which module 3 is fixed to the rotating mechanical component 1, and which module 3 rotates together with the said mechanical component. In the context of this invention the mechanical rotating component 1 refers to a rotating assembly of the dry friction clutch whose temperature is measured, but the same principle can be also applied to other cases where the space for installation of electronic components is very limited. The measurement module 3 is used for measuring the temperature from the sensor 2 and telemetry information transmission to the stationary electronic module 4. Since the measurement module 3 is mounted on the rotating component and since it cannot be directly wired to the stationary part of the system 5, the measurement module 3 transmits a measurement information by contactless technique (through the near electric field coupling), wherein said measurement module 3 must be provided with the contactless power supply. The measurement information is transmitted through a differential capacitive coupling channel to the stationary electronic module 4, which serves for the contactless reception of the measurement information, processing of the received signal, and which contains an excitation for contactless power supply of the measurement module 3, by means of the energy from the generated magnetic field. The stationary electronic module 4 is mounted on the stationary part of the mechanical system 5, relatively to which stationary part the element 1 rotates.

The temperature expected in measurement points where the sensors 2 are installed can reach up to 350 °C, e.g. in applications of the temperature measurement on the dry friction clutch. Since there is a temperature gradient on the rotating mechanical component 1, the measurement module 3 needs to be installed at the position where the lowest operating temperatures on the mechanical component 1 are expected, which do not exceed the operating temperature range of used electronic components (up to 125 °C in case of using electronic components from the automotive temperature range, or up to about 200 °C in case of using components from the extended temperature range, depending on the technology). The device according to the presented invention concept can be implemented, if needed, by using the electronic components from the extended temperature range currently available on the market. In practice, for most of real scenarios in the application of measurement of the temperature of the dry friction clutch it is possible to locate spots on the rotating mechanical component 1 where under the most unfavorable operating conditions the working temperature does not exceed 200 °C, thus making the invention suitable for mass application.

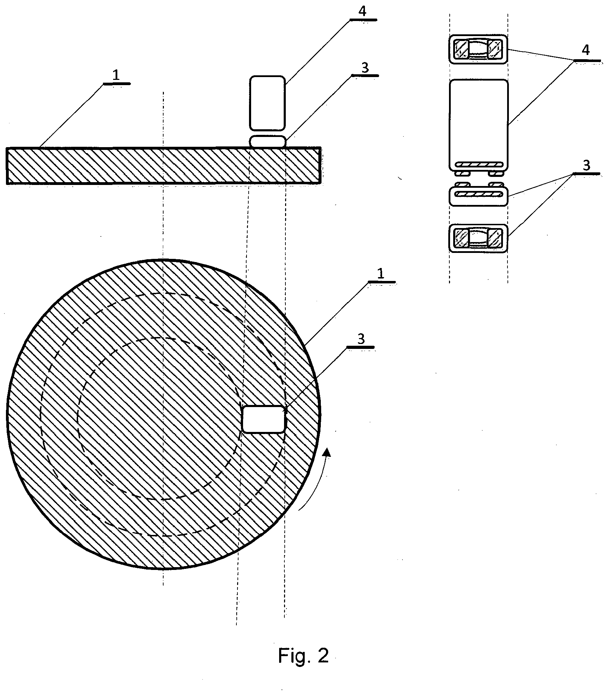

One of the basic limitations in the application of direct measurement of the dry friction clutch rotating component temperature which this invention attempts to solve relates to an extremely small space for installation of the temperature measurement electronic module 3 on the rotating mechanical component 1. The module 3 must have as small dimensions as possible in order to have a minimal impact on a mechanical design and a balance of rotating parts of the dry friction clutch. Considering the relatively high power consumption of the circuitry, the existing inductive telemetry solutions require a relatively large space for accommodating coils for the contactless power transfer. The higher energy requirements mean a greater number of turns and a larger area of the energy receiving coil, and therefore the choice of the capacitive coupling approach for information transmission provides a solution with lower power consumption and consequently smaller space occupancy of the coil on the rotating component. With inductive telemetry, it is often the case that a coil windings must be wrapped around the entire perimeter of a mechanical component body or the most part of it, which is why the existing solutions have not been yet accepted for the applications in mass-production. Mechanical installation of the measurement module 3 on the rotating component 1 is shown in Figure 2, according to the one embodiment of the invention. The lower part of Figure 2 shows the position of the module 3 on the rotating component 1 in a top view. In this view, it can be seen that the module 3 occupies very small space on a rotating component 1, since the module 3 is implemented as a miniature compact unit that occupies a small area and a small portion of a rotating profile of the rotating component 1, with a minimum height to accommodate for all necessary system components.

In the lower part of Figure 2 one can notice that a rotational movement outline of the module 3 is defined by two concentric circles, wherein the module 3 occupies an area in the range from 1 to 20 cm2, with a preferred height of the module 3 In the range from 5 to 20 mm. In the lower part of Figure 2 the module 4 is located above the module 3, but It Is not drawn for sake of clarity and its position is shown in the upper part of Figure d.

In the shown configuration, the module 3 is mounted on the upper, Le. outer side of the disc or a similar structure (depending on the embodiment of the rotating mechanical component 1), above which there is a free space for accommodating the stationary module 4, as shown in the upper part of the Figure 2. On the underside of the rotating component 1 in this example there are the rest parts of a mechanical assembly of the dry clutch and this space is not suitable for stationary module 4 installation. In the shown configuration, the electric field coupling is used for measurement information transfer, and the magnetic field is used for energy transfer between the modules 3 and 4. Telemetry signal and power transmission occurs in bursts and periodically, during very short time intervals when the measurement module 3 and the stationary module 4 are very close to one another during rotation of the component 1.

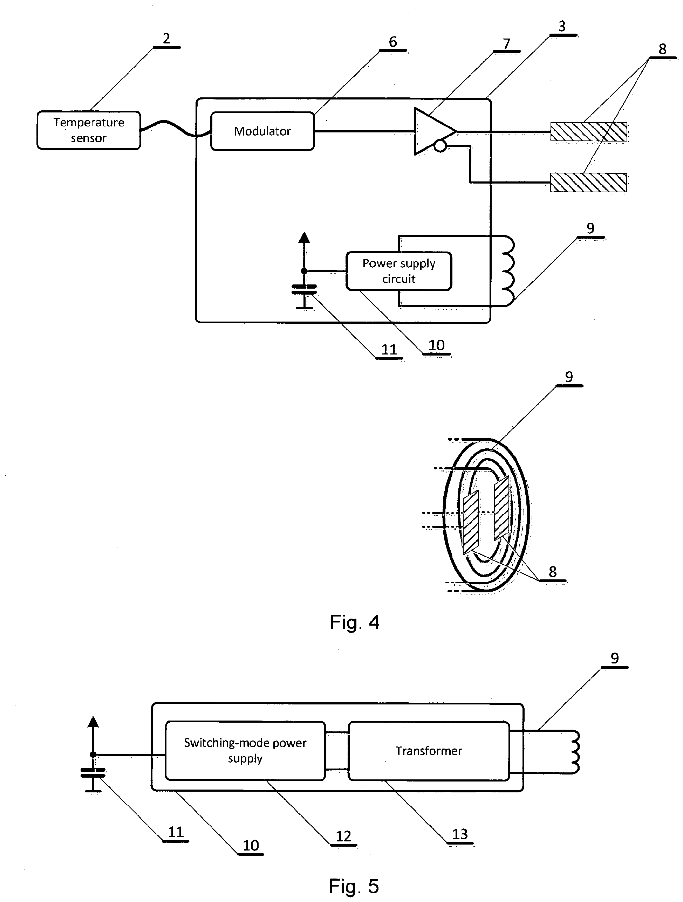

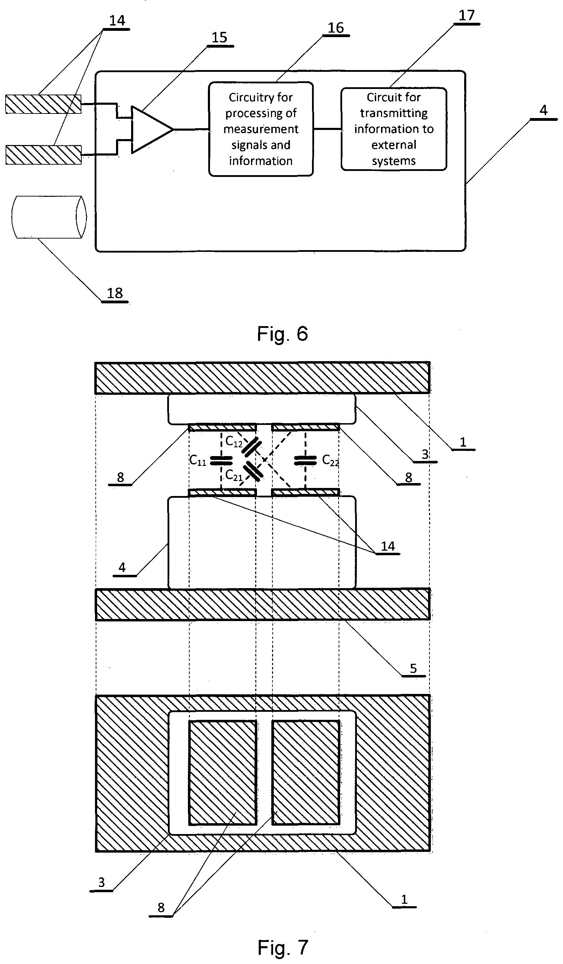

The upper part of Figure 2 shows the mounting arrangement of the module 3 relative to the rotating component 1 in a side view. In this view, it can be seen that the stationary module 4, which serves for reception of telemetry data and transmission of power to module 3 via the magnetic field, is mounted on the stationary side of the system so that during the pass of the module 3 during the rotation of the mechanical component 1 the modules 3 and 4 are in parallel to one another and as close as possible to each other. Capacitive coupling for the signal transmission and inductive coupling for energy transfer are active only during a small part of the rotation period, when the modules 3 and 4 are situated mutually in parallel and directly one above another. A prerequisite that such compact configuration could be realized is the power consumption minimization, which is described above. On the right side of Figure 2 a more detailed view shows how the electrodes for information transmission are capacitively coupled and how coils for transferring the energy are magnetically coupled. In the right part of Figure 2 the view on the modules 3 and 4 is shown in a side view, at the time instant when during the rotation of the component 1 modules 3 and 4 are positioned directly one above another. On the upper side of the module 3 in this view the pair of transmitting electrodes 8 for capacitive signal transfer is depicted (as shown in more details in Figure 7), while on the bottom side of the module 4 the pair of receiving capacitively coupled electrodes 14 is shown. It is important to ensure that the corresponding electrode pairs 8 and 14 are positioned directly one above another in order to achieve the maximum coupling capacitance between electrode pairs of the same polarity and the minimum coupling capacitance of electrode pairs of the opposite polarity. Right below the pair of transmitting electrodes 8 for capacitive signal transfer there are one or more receiving coils 9 for collecting the energy from the magnetic field for power supply of the module 3 (as shown in more details in Figure 4). Below and above the modules 3 and 4 on the right side of Figure 2, top and bottom views of the modules 3 and 4 are depicted. One can notice that the one or more receiving coils_9 for contactless power supply of the module 3 is located directly below the pair of transmitting electrodes 8, which can be implemented in such way because there is no interference caused by the magnetic field to the electric field for the signal transmission via capacitive telemetry, which further facilitates the implementation of such a compact design. The same way of placing the transmitting coil or a permanent magnet (depending on embodiment) is applicable to the module 4.

In such a configuration, it is of a crucial importance to achieve the minimum or as less as possible dimensions of the module 3. The parameters affecting the dimensions of the module 3 are as follows: a space for electronic circuits on printed circuit board (PCB), a space for coil for collecting the energy from the magnetic field, and a space for the electrodes for transmitting signal via differential capacitive coupling. The space for electronic circuits on a printed circuit board can be minimized by employing previously described concept, which results in a relatively low complexity of the circuitry that can be implemented on a compact printed circuit board, and, if necessary, realized in application-specific integrated circuit (ASIC) as a system on a chip (SoC), if there is a need for such further miniaturization. The dimensions of the coil are determined by a power consumption of the circuitry, and significantly lower power consumption can be achieved by choosing the capacitive coupling for signal transmission instead of inductive coupling, what is proposed by this invention. Dimensions of the electrodes for capacitive signal transfer are not as critical as the dimensions of the coils, and even with small electrodes (e.g. from the order of tens mm² or more) good results can be achieved.

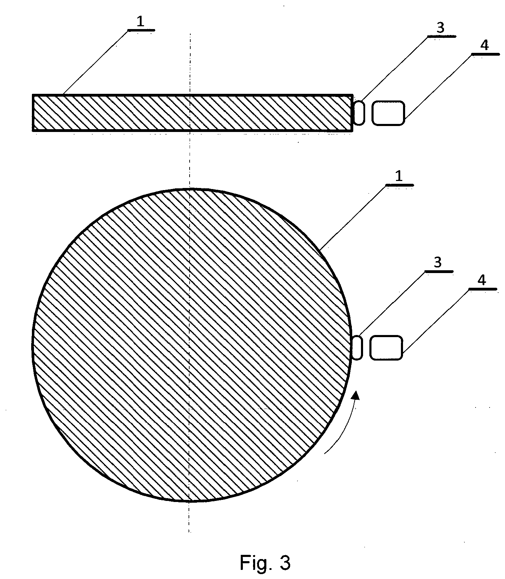

The second mode of installation of the module 3 proposed by the invention is shown in Figure 3, in which the module 3 is mounted on the outside circumference of the rotating component 1, wherein the module 4 is positioned near the outside circumference of the rotating component 1. This arrangement is similar to the principle shown in Figure 2 and utilizes a minimum possible space for installation, thus enabling bringing the modules 3 and 4 very close to each other. In the upper part of Figure 3 the side view is shown, while in the lower part of Figure 3 the top view is shown, in a similar manner as described for Figure 2.

For both installation scenarios shown in Figures 2 and 3, the module 3 can be placed or mounted either on the surface of the rotating component 1, or the module 3 can be arranged In a predetermined opening In the mechanical component 1. Arrangement of the module 3 in the predetermined opening ensures that the module 3 does not protrude outside the surface of the component 1.

In the proposed invention concept by which the least possible space occupancy of the measurement module 3 is to be achieved, it is needed to transfer a sufficient amount of the energy from the module 4 to the module 3, in a very short time interval when the measurement 3 and stationary 4 modules are directly one above the other, and to simultaneously receive the measurement Information by the module 4 from the module 3, with the minimum system complexity. For example, if the rotational speed of the rotating component 1 is 6000 rpm (which Is the approximate upper limit for velocity which is expected in practical applications for the dry clutch), and if the device is designed so that it takes up to 1 % of the circumference of the circular coupling contact profile between modules 3 and 4 in order to achieve very compact installation, then the active time during which the modules 3 and 4 are in a close contact is only 100 µs (because the time required for one full rotation of 1 is 10 ms at this rotational speed). During the close contact time period, a sufficient amount of energy pulse through the magnetic field coupling must be transferred from the stationary part of the system 4 to the rotating module 3, and simultaneously the information about the temperature measured by module 3 must be transmitted to the module 4. The cycle in which there is an active electric and magnetic field coupling between the modules 3 and 4 in these conditions is repeated every 10 ms. Depending on the rotational speed and the percentage of the rotating component circumference participating in a coupling contact profile between the modules 3 and 4, these time durations can be different, however, above is given a rough estimate for the expected most unfavorable working conditions under which it is necessary to transfer a sufficient amount of the energy and achieve a reliable information burst transfer about the measured temperature.

The described conditions in which the system must reliably operate and transfer energy and information between the modules 3 and 4 are very challenging, especially from the viewpoint of energy transfer, and due to the higher energy requirements classical approaches using inductive telemetry typically require to provide a continuous inductive coupling between the primary and secondary sides of the system for power transfer, or at least for most of the time during the period of one rotational cycle. Due to the requirement for small space occupancy, it is necessary to use a small coil in the module 3 and small permanent magnets or electromagnets as a magnetic field source 18 in the module 4. Considering that under the most unfavorable case the time-of-flight of the module 3 next to the module 4 is about 100 µs, it is necessary to collect the sufficient amount of energy from the magnetic field in an appropriate manner during that short time period, and to store a surplus of the energy until the next moment when the modules are in close proximity. In order to satisfy proper operation of the module 3, the amount of energy transferred within the one period of rotation must be greater than the energy spent for power supply of the module 3 during that period, meaning the module 3 must be realized to meet requirements for ultra low power consumption. One also must take into account the voltage generated across the energy receiving coils 9, since the greater is the supply voltage needed to power up circuitry the greater must be a number of turns of the coil winding. Therefore, one of the objectives of the present invention is also to design the device that will work with the lowest possible output voltage across the coil for receiving the energy from the magnetic field, in order to enable use of the receiving coils 9 with minimum dimensions, i.e. with the least possible number of turns.

Schematic representation of the measurement module 3 is given in Figure 4. The RTD temperature sensor 2 is connected to the FM modulator 6, which serves for a direct conversion of a temperature-dependent resistance into the frequency. An output of the FM modulator 6 is routed to the differential driver circuit 7, which produces a differential voltage output to drive two electrodes 8 for a differential capacitive signal transfer. The power consumption of a described measurement chain can be minimized by a careful selection of electronic components and a range of frequencies from the modulator, and it can be brought to the range of µW - mW, which significantly eases the requirements for implementation of the compact contactless power transfer system with small dimensions. Contactless power supply is based on a change in magnetic flux in the receiving coils 9 for collecting the energy, the receiving coils 9 during the rotation passes through the magnetic field generated by the stationary module 4. Terminals of the receiving coils 9 are connected to the low power and high efficiency power supply circuit 10, which serves to convert the energy collected by the receiving coil 9 into the DC voltage for power supply of the circuitry of the measurement module 3. The surplus of the energy collected during one rotation is stored in the capacitor 11, the capacitor 11 provides power during the time when the modules 3 and 4 are not in a close proximity. In the lower part of Figure 4, an example of mechanical arrangement of the pair of transmitting electrodes 8 for transmission of FM signal by the differential capacitive coupling, and the receiving coil 9 for collecting the energy from the magnetic field is shown, where it can be seen that the receiving coil 9 can be placed in the same space together with the pair of transmitting electrodes 8, because the transfer of energy does not interfere with the data transmission.

The resistance temperature detector (RTD) is used as temperature sensor, and it is typically produced by using pure materials (for example, platinum, nickel or copper). RTD sensors are suitable in applications for typical temperature ranges up to 600 °C, and they are easier to use than thermocouples because there is no need for cold-junction compensation. They also exhibit very good measurement characteristics and they have a wider temperature range than NTC, PTC and integrated semiconductor temperature sensors. RTD temperature sensor 2 is mounted directly in the measurement point on the rotating component of the dry clutch whose temperature is monitored, and allows a high accuracy of temperature measurement, better than non-contact methods of temperature measurement.

The power supply circuit 10 is an important part of the technical solution that is proposed by the present invention. The power supply circuit 10 is based on a DC-DC converter optimized to work with low input voltages (in the range of tens or hundreds of millivolts and more) and alternatively for the energy harvesting purposes. Working with small voltages allows minimization of the dimensions of the receiving coil 9, and the use of special function energy harvesting DC-DC converters allows minimum power consumption, high efficiency, and work with very low energy levels. Since at the terminals of the receiving coils 9 a relatively small AC voltage is generated during a very short period of time, such voltage is not suitable to be directly connected to an input of the DC-DC converter. Therefore, it is important to include in the input part of the DC-DC converter a rectifying circuit (e.g. bridge rectifier) with a minimal voltage drop and losses (e.g. Schottky diodes) so that the DC-DC converter would operate from the minimal input voltages at the receiving coils 9 terminals. The smaller the voltage needed for operation of the power supply circuit 10, the smaller is the number of turns and dimensions of the coil, i.e. number of turns and dimensions of the receiving coils 9 are in a direct relationship with the voltage needed for operation of said circuit 10.

Classic approaches to the inductive telemetry implementation require a relatively large coils to transfer power because it is necessary to transfer a sufficient amount of energy through air gap of a relatively high magnetic resistance and with stray inductances due to metal parts of the mechanical system, and ensure relatively high voltage for voltage regulator on the receiving side, which is particularly difficult in the case of small coil surfaces that are under the influence of the magnetic field during only very short period of time, in the arrangement proposed by the invention.

In cases where the peak voltage induced at the terminals of the receiving coils 9 is very small and insufficient for the operation of the DC-DC converter in the described embodiment, because of the very small dimensions of the receiving coils 9, the AC voltage at the rectifier in the input of the DC-DC converter 12 can be increased by using a small compact transformer 13 (e.g. in the surface mounting technology, SMT), as shown in Figure 5, without significantly affecting the dimensions of the measurement module 3. In this way, it is possible to increase the amplitude of the AC voltage from the order of tens of millivolts or more to a sufficient level, necessary for the proper operation of the DC-DC converter.

The concept shown in Figure 5 can be applied in cases where the voltage induced at the terminals of the receiving coils 9 needs to be increased to a relatively high value of the input voltage for DC-DC converter when using DC-DC converters that are not optimized for energy harvesting applications and work with extremely low input voltages, without the need for a substantial increase in dimensions and number of turns of the receiving coil 9 (e.g. when the required input voltages of the DC-DC converter are in the order of volts). There are two typical cases where it is appropriate to use DC-DC converters without optimizations to work from very small input voltages and for energy harvesting applications: the case of working in the extended temperature range (e.g. up to 200 °C of environmental temperature) or when it is required to achieve a minimum system price. In the first case, a problem may arise in the availability of components because a very limited number of components is produced in the extended temperature range and only a few models of the DC-DC converters are currently available on the market in such a temperature range, of which there are currently no parts optimized for energy harvesting applications in the extended temperature range. Furthermore, the DC-DC converters optimized for energy harvesting applications are more expensive than ordinary DC-DC converters so this approach can reduce the overall system cost.

As the source of the magnetic field in the module 4 on the primary side for power supply for module 3 on the rotating side both the sources of time-invariant or time-variable magnetic fields can be used. As a source of the time-invariant magnetic field a permanent magnet or electromagnet (without a core or with ferromagnetic core) can be used, through whose windings direct current is flowing. As a source of time-varying magnetic field an electromagnet (without a core, or with ferromagnetic or ferrite core) can be used, through whose windings alternating is flowing.

In the case of time-invariant magnetic field, the magnetic flux through the energy collecting receiving coils 9 changes periodically due to rotation of the mechanical component 1, said magnetic flux change induces a voltage at the terminals of the receiving coils 9 which is used to provide the energy for the module 3 power supply. This arrangement is simple and cheap to implement, and in the case of using permanent magnets an active magnetic field excitation in the stationary side module 4 is not required. The energy pulse obtained as a result of the magnetic flux change through the receiving coil 9 is collected by the power supply circuit10 and it can be stored in the energy storage element 11 (e.g. supercapacitor or ordinary capacitor). Considering that in one pass a very small amount of energy is collected, a certain number of passes of the receiving coil 9 through the magnetic field would be needed in order to achieve a nominal supply voltage on the output of power supply circuit 10. Energy collected from the magnetic field is stored in the capacitor 11, which serves as a power supply for ultra low power circuitry providing the needed supply voltage during the time when the modules 3 and 4 are not in a close proximity, i.e. not mutually coupled. The advantage of the approach for powering the module 3 from time-invariant magnetic field is in the simplicity, reliability and robustness of implementation, because it is possible to achieve a sufficiently strong magnetic field by using strong permanent magnets (e.g. neodymium magnets), which increases the overall reliability of the system (because no extra electronic circuit for magnetic field generation on the stationary side is needed) and because it lowers the power consumption on the stationary side.

As a source of time-varying magnetic field in the stationary module 4 the electromagnet through which winding alternating current flows can be used. The coefficient of magnetic coupling between the primary and the secondary coil can be increased by using a ferrite core, which is a better choice than the ferromagnetic (iron) core when higher frequencies in excitation circuit are used. The use of alternating magnetic field to power the module 3 on the rotating side of the system has several advantages: a change of the magnetic flux within the area of the receiving coil 9 is achieved independently of the rotation, it is possible to achieve a significantly higher change in the magnetic flux and thus the higher induced voltages, bringing the primary and the secondary windings (coils) for energy transfer in the resonance can maximize the amount of energy transferred to the rotating module, for the high enough excitation frequency (i.e. when the period of the excitation current in the primary coil is much shorter than the time of flight during which the modules 3 and 4 are close to each other) it is possible to effectively use the transformer 13 on the secondary side in order to increase the input voltage to the DC-DC converter, regardless of the duty cycle of the inductive coupling during one rotation, the frequency of magnetic excitation can be chosen so as not to interfere with frequencies used by FM modulator for telemetry transmission of measured temperature information etc. A disadvantage of alternating magnetic field excitation for powering the module 3 by inductive coupling is a need for additional circuitry in the module 4 to drive an excitation coil, which increases the cost of the system and due to increased complexity of solution reduces the overall reliability.

Schematic concept of the electronic module 4 on the stationary side of the system is shown in Figure 6. The module 4 comprises a pair of receiving electrodes 14 adapted for signal reception by means of a differential capacitive coupling, an electronic circuit for analog processing of the signal from the pair of receiving electrodes 14, i.e. a signal reception circuit 15 (e.g. a differential amplifier), a circuitry 16 for further analog and digital processing of the measurement signal, a circuit 17 for transmitting information about the measured temperature towards external systems through the one or more analog and / or digital communication interfaces, and the magnetic field source 18 for powering the module 3, that can be realized by using either permanent magnets or electromagnets with DC or AC excitation.

A frequency modulated signal containing information about the temperature, is sent from a transmitter module by means of the differential capacitive coupling between the pair of transmitting electrodes 8 on the transmitting module 3 and the pair of receiving electrodes 14 on the stationary module 4. The relative arrangement of the electrodes 8 and 14 must be such that when the module 3 passes nearby the module 4 during the rotation of the mechanical component 1 each of the electrodes passes approximately over the corresponding electrode on the opposite side.

An example of a preferred arrangement of pairs of the electrodes 8 and 14 is shown in Figure 7. The upper part of Figure 7 shows a cross-section view of the module 3, installed on the rotating component 1 and having two electrodes 8, at the time instant when said module 3 is passing by the stationary module 4, installed on the stationary part of the mechanical system 5, wherein the electrode pairs 8 and 14 during that short time period are overlapped in a close proximity, i.e. in a mutually parallel position relatively to each other. The lower part of Figure 7 shows a top view of a part of the system where an example of geometry of the pair of transmitting electrodes 8 is visualized, where the pair of electrodes 14 follows the same arrangement (in the lower part of Figure 7 the stationary module 4 is not shown due to overlap of parts in this view). During the time period when the module 3 is directly above the module 4, in its close proximity (which can last from a few tens to a few hundreds of microseconds or more for high rotational speeds), a capacitive coupling between said pairs of electrodes is formed, which can be modeled by capacitances C₁₁, C₁₂, C₂₁ and C₂₂, as depicted in Figure 7. The capacitances C₁₁ and C₂₂ are important for signal transmission since they form a path through which the differential signal from the pair of transmitting electrodes 8 of the module 3 is transmitted to the corresponding electrodes 14 on the module 4 through the said linkage capacitances C₁₁ and C₂₂, said transmission resulting in generation of a differential voltage on the pair of receiving electrodes 14, said differential voltage follows the waveform of the differential driving signal on the pair of transmitting electrodes 8. The differential voltage on the pair of receiving electrodes 14 represents a received useful signal, which is attenuated by a factor depending on capacitive signal transmission channel characteristics. Unwanted parasitic coupling through the capacitances C₁₂ and C₂₁ causes the interference, which is considerably smaller than the useful signal in this configuration because for proposed geometry of electrodes the useful capacitances C₁₁ and C₂₂ are substantially greater than the parasitic capacitances C₁₂ and C₂₁. The differential voltage received on the pair of receiving electrodes 14 is processed by the signal reception circuit 15 (shown in Figure 6), which can be realized by using a differential amplifier in order to achieve the maximum amplification of the useful differential component of the received signal before further processing, and to provide the high common-mode rejection ratio of the unwanted common-mode interference signal. Such approach to the transmission and processing of the received signal inherently minimizes the impact of the common-mode interference voltages that can be present on the pair of receiving electrodes 14, caused e.g. by a relatively distance sources of interference. It should be emphasized that the additional advantage of the differential capacitive signal transmission in application for rotating mechanical components is that the transmitting and receiving electronic modules do not have to refer to the same reference potential (the ground of the electrical circuit) because the electrical connection between the rotating mechanical component 1 and the stationary part of the system 5 can be poor, no matter that the rotating component and the stationary side of the system are typically both made of a metal (e.g. the impact of contact resistances of the bearings, lubricants, etc.). The described characteristics and advantages cannot be achieved by a simple implementation of asymmetrical capacitive coupling where the signals through the capacitive coupling link are not treated as differential.

The received and amplified raw signal, after basic analog processing in the signal reception circuit 15, is sent to the circuitry 16 for further processing of a measurement signal. Said circuitry 16 determines a frequency of the received signal, converts said frequency into information about temperature, and transmits this information via circuit 17 for communication with external systems, in analog or digital form. Typically, the circuitry 16 for processing of the measurement signal and information is realized by using a microcontroller or a digital signal processor (DSP), which can be used for measuring the frequency of the received signal and for sending the information to external systems via circuit 17, depending on the application in where the system is used.

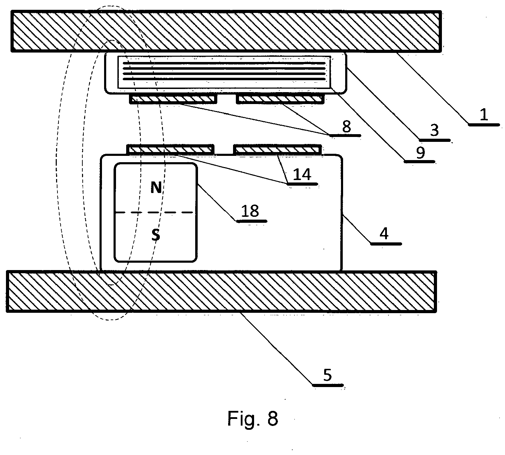

To determine the best position of the receiving coils 9 for collecting the energy from the magnetic field in the module 3, because of the importance of how the magnetic field lines are closing, it is necessary to take into account its placement relative to the source of the magnetic field 18 in the module 4 on the stationary part of the mechanical system 5. Figure 8 shows a proposed preferred mode of placement of the receiving coil 9 relative to the magnetic field source 18. The example in Figure 8 is shown for a case of using a permanent magnet as the source of the time-invariant magnetic field 18, but the same considerations apply in case when electromagnet and time-varying magnetic field are used, because for both cases the most important is how the magnetic field lines are closing. Figure 8 shows a cross-section view of the system at the time instant during the rotation when the modules 3 and 4 are positioned in the close proximity and mutually in parallel position, wherein the magnetic coupling between them is the strongest. The vertical axis of the magnetic field source 18 passes very close to an inner side of the coil loop 9 in order that the magnetic field lines, that enter the area bounded by a coil loop, close outside of it, because if this is not satisfied the magnetic flux through the coil loop area can be partially or fully cancelled out, and the induced voltage will be very low in that case. The exact position where it is the best to locate the source of the magnetic field source 18 relative to the receiving coils 9 depends on the implementation, but it is important to assure that the magnetic field lines do not close back through the area bounded by the loop of the receiving coils 9, or that the magnetic field lines do not completely travel outside of the area bounded by said loop for the same reason. Figure 8 also shows the placement of the pairs of capacitive electrodes 8 and 14 relatively to the receiving coils 9 and the magnetic field source 18. It can be noticed that the electrodes 8 and 14 can be placed in the same space with the receiving coils 9 and the magnetic field source 18 because the subsystems for energy and signal transfer do not interfere with each other, which is important in order to achieve a compact system implementation and a space saving design.

In some applications, it is necessary to measure the temperature in more than one test point. The previously described embodiment of the invention, in which the resistive temperature sensor modulates the frequency of the FM modulator that is transmitted to the stationary side of the system by means of the differential capacitive coupling, cannot be directly applied to the multichannel case since the described approach modulates and transmits only one frequency, which corresponds to the only one temperature sensor. In cases of generalization of the described concept where it is necessary to measure the temperature in multiple test points, there is no significant change in the dimensions of the measurement module 3, as it will be described below.

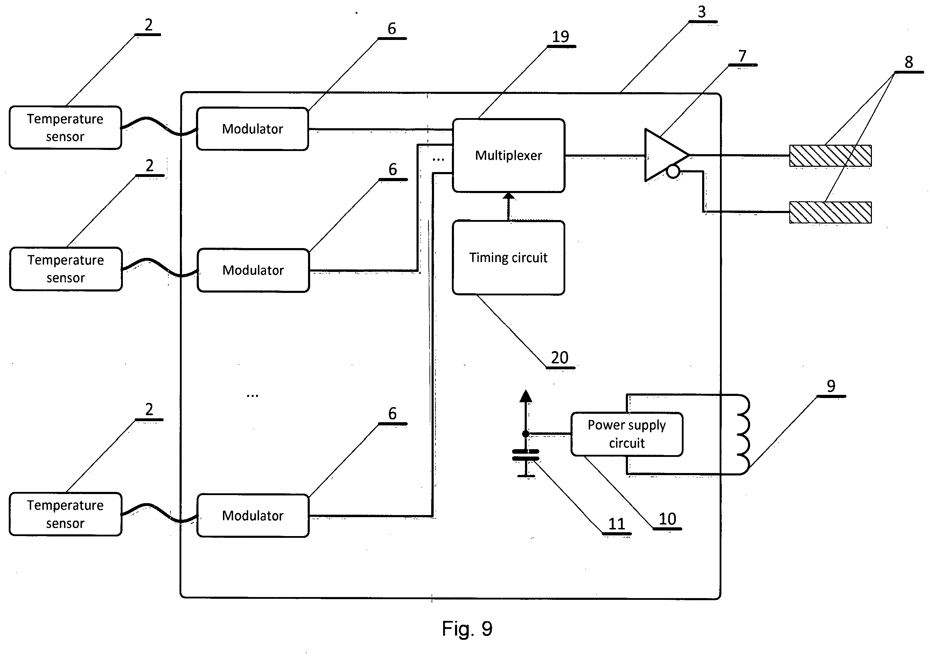

Figure 9 shows a modified measurement module 3 for multichannel temperature measurement, which represents an extension of the concept described in the Figure 4 for a single channel case. One or more temperature sensors 2 are connected each to a separate FM modulator 6, where to each separate FM modulator 6, associated with channel₁₋ₙ, is assigned a separate central reference frequency f₁₋ₙ. Each central reference frequency f₁₋ₙ for each channel₁₋ₙ is selected so that the maximum frequency deviation of the measurement channel from the assigned channel central frequency, due to the temperature change throughout the whole temperature measurement range, does not cause the overlap between the adjacent measurement channels. Outputs from each of FM modulators 6 are connected to the inputs of a multiplexer 19, while a timing circuit 20, connected to the multiplexer 19, during the time slot Tₖ selects one of the channels₁₋ₙ, whose FM modulated signal is forwarded to the output driver circuit 7, which controls the voltage applied to the pair of transmitting electrodes 8 for the differential capacitive coupling signal transmission. The described arrangement implements a time domain multiplex in which during time slots Tₖ, defined by the timing circuit 20, the frequencies corresponding to each channel₁₋ₙ for temperature readouts obtained from temperature sensors₁₋ₙ 2 are transmitted. This approach accomplishes that at any time instant a media for transmitting information by means of modulated electric field is used for sending information about only one measurement channel at the time, after which the measurement information about readings for other channels is sent sequentially and successively, where during each time slot Tₖ the receiver 4 can determine to which channel₁₋ₙ given time slot is associated to, because the central reference frequency₁₋ₙ related to the each channel₁₋ₙ is known, and also the maximum frequency deviation from the central reference frequency₁₋ₙ for each channel₁₋ₙ is known. The multiplexer 19 can be realized as an analog or a digital circuit, since the FM modulated signal can pass through the both types of multiplexers. The timing circuit 20 can be realized by a simple digital circuitry (by using e.g. astable multivibrator, counters, logic gates and so on), and enables very low power consumption in a continuous counting mode. Other parts of the module 3 are the same as in the single channel variant described in Figure 4.

A slightly different, alternative concept for multichannel implementation of the module 3 in regard to the one shown in Figure 9 can be realized in a way that the temperature sensors 2 for each measurement channel are connected directlyto the inputs of the multiplexer 19, instead of connecting them to the separate FM modulators 6, and the single output of the multiplexer 19 is connected only to one modulator FM 6. In this case, an analog multiplexer must be used, and it must minimally affect the resistance of the RTD temperature sensor 2 seen from the output of the analog multiplexer, providing that a series resistance of the multiplexer switches is sufficiently small compared to the resistance of the sensor itself. In this configuration, only the single FM modulator 6 can be connected between the output of the analog multiplexer 19 and the input of the differential signal driver circuit 7. The analog multiplexer 19 is controlled by the timing circuit 20 which switches periodically RTD sensors 2 for each channel₁₋ₙ to the input of the modulator 6 via a small resistance, which results in the equivalent circuit at each time instant as illustrated for the case of a single channel variant depicted in Figure 4. The advantage of the described alternative implementation is the use of the single FM modulator 6 which saves the space on the PCB, while the disadvantage is the occurrence of transients in the modulator circuit due to the channels switchover, because a certain time is needed that the frequency at the output of the modulator becomes stable and within the accuracy limits after a new RTD sensor with a different value of resistance is switched to the input of the modulator, with a sensor resistance corresponding to the measured temperature. These effects of transients can make the interpretation and the reconstruction of the measured values at the receiver module 4 more difficult, while the initially proposed concept shown in Figure 9 does not suffer from such problems related to transients, because the outputs of each separate modulator 6 are stable for each measurement channel, and the effects of quick and almost instantaneous channel switchover in the multiplexer 19 of already stable frequency outputs have a negligible negative impact on signal reconstruction on the receiving side. If the several FM modulators 6 are realized by using discrete electronic components then they can occupy a significant area on the printed circuit board, but in principle they can be realized on a single application-specific integrated circuit (ASIC), if there is a need for an additional space saving on the printed circuit board.

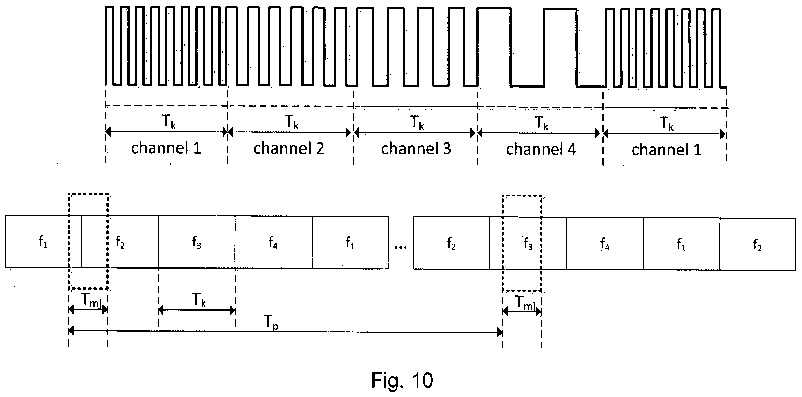

The Figure 10 shows a signal waveform that utilizes a time domain multiplex of a frequency modulated signal, according to the concept of the module 3 for multichannel temperature measurement shown in Figure 9.

The upper part of Figure 10 shows an example of the time domain multiplex of the FM signal for the sample case of four channels₁₋₄. The timing circuit 20 defines a duration of the time slice Tₖ during which the multiplexer 19 selects the channel₁₋₄ from which the measurement informafion is sent to the stationary module 4. For the duration of the time slot Tₖ, the frequency is approximately constant and its value is within the non-overlapping frequency range defined for each channel₁₋₄. On the receiving side the result of the instantaneous measurement of the frequency₁₋₄ identifies the channel₁₋₄ (because the non-overlapping frequency ranges for each channel are known), and gives a precise value of the measured temperature for a given channel₁₋₄. At the moment when the timing circuit 20 selects the output from the next channel₁₋₄ modulator 6 via the multiplexer 19, a new frequency f₁₋₄ appears immediately on the differential driver 7 output, and the signal of the said frequency is transmitted to a stationary module 4 for processing and decoding. In the Figure 10 it can be seen that the signal is sent continuously, and the timing circuit 20 controls the moments when the switchover between channels occur.

The lower part of Figure 10 illustrates the meaning of parameters of the time domain multiplexed FM signal for the multichannel temperature measurement, where Tₖ denotes the duration of a time slice assigned to each channel₁₋₄, and Tₘⱼ denotes the time interval (time window) during which the receiver module 4 is receiving a useful signal in a part of rotation period when modules 3 and 4 are in a close proximity and when the capacitive coupling between them is present. The timing diagram in Figure 10( is shown for an example of four-channel temperature measurement, where the frequency f₁₋₄ relating to the channel₁₋₄ is transmitted in the time slice of duration Tₖ. The time required for one full revolution of the rotating mechanical component 1 is denoted by Tₚ, and the time during which the capacitive coupling between the modules 3 and 4 is present, in the moment when they are in the close proximity to each other, is denoted by Tₘⱼ. The time window during which the receiver 4 receives the information from the measuring module 3 is indicated by a dashed rectangle in Figure 10. At high rotational speeds the period Tₚ may be of an approximate order of 10 ms, and the time of an approximate order of 100 ps. The time window Tₘⱼ during which the receiver 4 measures the frequency is not synchronized with the channel switchover time instants on the transmitting module 3. In the first time window Tₘⱼ in the lower part of Figure 10 the receiver module 4 will measure the frequencies f₁ and f₂. The task of the receiving module 4 is to deduce by means of signal processing that the information about temperatures from the channel₁ and channel are correlated to these two frequencies in the first time window Tₘⱼ, and further to calculate the values of the measured temperatures from the measured frequencies f₁ and f₂. In the next time window Tₘⱼ in the shown example, which will occur after one full rotation of the mechanical component 1 after the time period Tₚ, the receiver will measure the frequency f₃ and conclude by means of signal processing that the channel₃ is in correlation with measured frequency f₃. In the illustrated example, during one rotation of the mechanical component 1 the receiver will miss the information about the frequency f₄. However, during the time of several rotations it is very likely that the receiver will receive the frequencies from all channels, and that time windows Tₘⱼ will occur in such moments that at least once in a few seconds the information from each measurement channel₁₋₄ will be received. Taking into account relatively high rotational speeds in practical applications (from several hundred to several thousand revolutions per minute), it is obvious that it is highly unlikely that in a time frame of a few seconds the frequency for each measurement channel₁₋₄ will not be received at least once. Such unlikely situation would occur only under conditions that the rotational speed of the mechanical component 1 is perfectly matched with the period of channel switchover in a time domain multiplex in the module 3, the time instants when the receiving module 4 starts measuring the frequency are perfectly synchronized with the rotation of the mechanical component 1, and the start of frequency measurement in the receiver module 4 is always aligned so to measure the same channel₁₋₄ each time. The probability of such unlikely situation can be further minimized by introducing a randomness into the timing circuit 20, for example by generating a pseudorandom sequence of numbers which can be used to randomize the order of channels₁₋₄ switchover, or to randomize the duration of the time slot Tₖ for transmission of frequencies₁₋₄ associated with channels₁₋₄. Unlike the classic telemetry systems where it is usually required to transmit every measured signal sample without loss of information, in target applications for this invention it is sufficient to obtain the temperature readout at least once every few seconds, because the temperature is a relatively slowly varying quantity in target applications, considering a relatively long time constants associated with large thermal capacitances of the objects whose temperature is being monitored. It should be noted that in cases where the rotational speed is relatively low it is possible to measure all frequencies₁₋₄ of all channels₁₋₄ during a single time window Tₘⱼ and that the situation depicted by Figure 10 represents an example of the worst-case scenario. Signal processing algorithms at the receiver module 4 must provide means to estimate the time windows in which the received signal frequency is approximately constant, measure accurately the frequency in the identified constant-frequency time window, deduce to which channel₁₋₄ the measured frequency₁₋₄ belongs to, and calculate the temperature in the test point₁₋₄ related to the channel₁₋₄, based on the measured frequency₁₋₄.

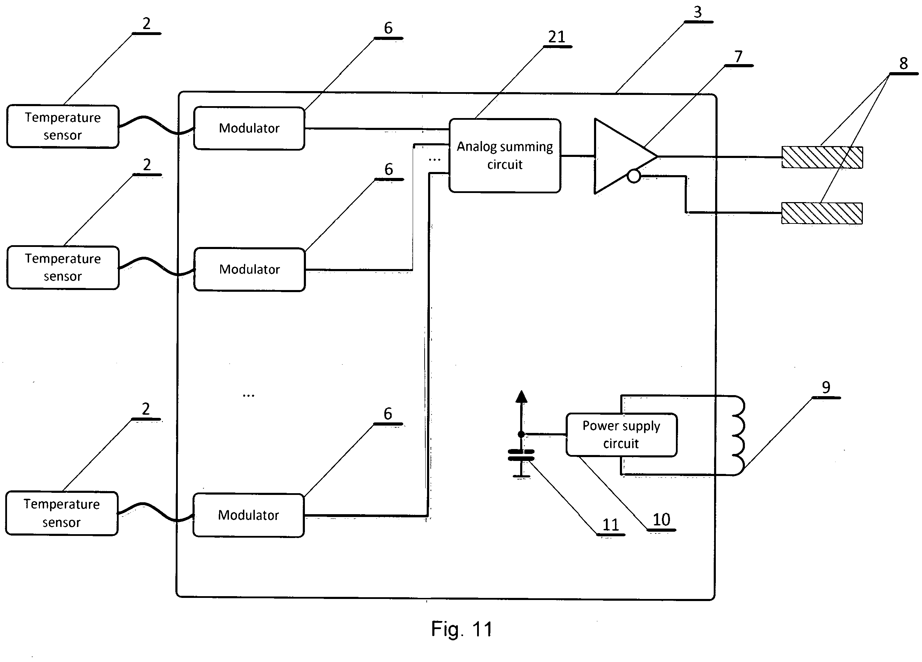

Figure 11 shows a modified measurement module 3 for multichannel temperature measurement, which represents an extension of the concept described in the Figure 4 for a single channel case, which uses a frequency domain multiplex of the FM modulated signal, in contrast to the previously described embodiment shown in Figure 9, which uses the time domain multiplex of the FM modulated signal. The concept of the multichannel system shown in Figure 11 is similar to the concept shown in Figure 9, but with a different approach to the measuring signal multiplexing. Each temperature sensor₁₋ₙ 2 is connected to the separate FM modulator₁₋ₙ 6, and to the FM modulator 6 of each channel₁₋ₙ is assigned a separate central reference frequency so that the maximum frequency deviation of the frequency₁₋ₙ from the assigned channel central frequency due to temperature change throughout the whole temperature measurement range does not cause overlapping between the adjacent measurement channels₁₋ₙ frequencies₁₋ₙ, as described for the concept depicted in Figure 9. In this embodiment, the outputs of all modulators₁₋ₙ 6 are connected to the inputs of an analog summing circuit 21, which sums the contribution of each channel₁₋ₙ with corresponding frequency₁₋ₙ depending on the temperature₁₋ₙ measured at each test point₁₋ₙ. The output of the analog summing circuit 21 contains all the frequency components₁₋ₙ corresponding to the contributions of all channels₁₋ₙ, combined into one signal which is being sent continuously. For an efficient transmission of such analog signal by means of the differential capacitive coupling, considering the signal waveform and the multiple frequency content, it is preferable to condition the signal by using a single ended to differential analog converter 7, and to connect the output of the converter to the pair of transmitting electrodes 8. In this case the waveform of the transmitted signal includes all the frequency components₁₋ₙ of all measurement channels simultaneously. The described approach implements the frequency domain multiplex because the contribution of each measurement channel₁₋ₙ is encoded by the frequency component, which can be extracted by means of the signal processing in the receiver module 4. As in the case of time domain multiplex described for configuration in Figure 9, it is necessary to ensure that the frequencies of the neighboring channels₁₋ₙ do not overlap for a maximum temperature change over the whole temperature measurement range. Other parts of the module 3 are the same as for the single measurement channel embodiment described in Figure 4.

The signal sent from the module 3 shown in Figure 11 is received and processed by the receiver module 4. It is possible to extract the frequencies corresponding to the each channel₁₋ₙ associated to the measurement of temperatures₁₋ₙ by using digital signal processing methods, such as Fast Fourier Transform (FFT), and to determine the temperature measured at each measuring point₁₋ₙ from the measured frequency₁₋ₙ. Another possibility for digital signal processing is to pass the received signal through the series of digital band-pass filters, tuned to the frequency bands of channels₁₋ₙ for measuring temperatures₁₋ₙ, and use the algorithm for extraction of the dominant frequency to determine the temperature for each channel₁₋ₙ. It is also possible to use other methods for detection and extraction of frequencies by means of digital signal processing techniques. The advantages of the embodiment depicted in Figure 11 in comparison to the time domain multiplex approach shown in Figure 9 are: the possibility of a bit simpler implementation of circuitry in the measurement module 3, and the avoidance of necessity for transmitting the separate time slices for each channel₁₋ₙ and their extraction during time of the several rotations, due to very short time Tₘⱼ when the modules 3 and 4 are in the close proximity. The disadvantage of this method is significantly higher demands on the processing power of the circuitry 16 for processing of the measurement signal in the module 4, because the algorithms typically require the use of a more powerful microcontroller, a digital signal processor (DSP) or a programmable logic (e.g. FPGA) instead of a simple microcontroller, which may affect the price and the power consumption of the module 4 on the stationary side of the system.

The present invention describes a device for measuring temperature or other physical quantities on the rotating assembly of a dry clutch. The device provides means for temperature measurement in one or more test points on a rotary mechanical assembly with high accuracy, with the contactless transmission of the measurement information through the near electric field coupling between the rotating and the stationary parts of the measurement system. The measurement module on the rotating side of the system allows the measurement of high operating temperatures of a dry clutch rotating component by using resistive sensors, the measurement module has dimensions that have a negligible impact on the construction and balance of rotating parts of the dry clutch. The minimum space occupancy and mass of the measurement module are achieved by the concept providing implementation of the electronic circuit with ultra low power consumption, enabling significant miniaturization of elements for contactless power transmission subsystem, particularly the receiving coil for collecting the energy from the magnetic field. Ultra low power consumption is achieved by using the resistive temperature sensors, one or more low power FM modulators, analog or digital multiplexers for multichannel use case, the differential capacitive signal transmission, and the power supply that allows operation from very low input voltages induced in the receiving coil for collecting the energy from the magnetic field.

## Claims

1. A device for measurement of physical quantities of a rotating mechanical element (1), said device comprising an electronic measurement module (3) and a receiving stationary electronic module (4), where transmission of signal and energy between the electronic measurement module (3) and the receiving stationary electronic module (4) is realized by a contactless transmission, wherein said contactless transmission of signal is realized by means of a capacitive coupling and the contactless transmission of energy by means of an inductive coupling, wherein the receiving stationary electronic module (4), relative to which the electronic measurement module (3) is configured to rotate, comprises one or more magnetic field sources (18) for contactless power transmission;
wherein the electronic measurement module (3) is configured to be attached to the rotating mechanical element (1) and adapted to process signals from one or more sensors₁₋ₙ (2) configured to be attached to the rotating mechanical element (1), wherein said sensors₁₋ₙ (2) are connectable to the electronic measurement module (3), the electronic measurement module (3) having a power supply circuit (10) adapted to provide power to the sensors₁₋ₙ (2) and to a circuitry of the electronic measurement module (3) and one or more receiving coils (9) connected via their terminals to the power supply circuit (10),
**characterized in that**
the electronic measurement module (3) comprises a pair of transmitting electrodes (8) adapted for differential capacitive signal transmission, wherein the receiving stationary electronic module (4) comprises a pair of receiving electrodes (14) adapted for differential capacitive signal reception of a signal sent from the pair of transmitting electrodes (8), wherein the contactless transmission of signal and energy occurs periodically in a time interval Tₘⱼ of a rotation period during which the electronic measurement module (3) and the receiving stationary electronic module (4) are in proximity and the one or more receiving coils (9) and the pair of transmitting electrodes (8) are in proximity with the pair of receiving electrodes (14) and the magnetic field source (18), and the power supply circuit (10) further comprises a capacitor (11) configured for storing a surplus of the energy collected during one rotation and for providing the energy to the sensors₁₋ₙ (2) and the circuitry of the electronic measurement module (3) during a time interval when the electronic measurement module (3) and the stationary electronic module (4) are not in close proximity.

2. The device according to claim 1, **characterized in that** the electronic measurement module (3) is adapted to be attached to a surface of the rotating mechanical element (1) or in a predetermined opening arranged in the rotating mechanical element (1).

3. The device according to claim 1, **characterized in that** the electronic measurement module (3) further comprises one or more FM modulators (6), a differential driver circuit (7) for controlling the pair of transmitting electrodes (8) for transmitting the signal by means of the differential capacitive coupling, where the signal transmission is realized by means of the differential capacitive coupling by using the pairs of electrodes (8) and (14) between which capacitances C₁₁ and C₂₂ are present when the modules (3) and (4) are in proximity in the time interval Tₘⱼ, wherein said pair of transmitting electrodes (8) is driven by a differential signal which contains measurement information from sensors₁₋ₙ (2) in a form of an FM modulated signal the receiving stationary electronic module (4) is adapted to receive.

4. The device according to claim 1, **characterized in that** the power supply circuit (10) further comprises a DC-DC converter (12), components for converting AC voltage from the one or more receiving coils (9) into DC voltage required for the DC-DC converter (12) to operate.

5. The device according to claim 3, **characterized in that** the electronic measurement module (3) comprises a multiplexer (19) or an analog summing circuit (21), where each output of the one or more FM modulators (6) is connected to the inputs of the multiplexer (19) or to the inputs of the analog summing circuit (21), or each of the sensors₁₋ₙ (2) is connected to a separate FM modulator (6) through the analog multiplexer (19).

6. The device according to claim 5, **characterized in that** the electronic measurement module (3) comprises a timing circuit (20), the timing circuit (20) is connected to the multiplexer (19) for selecting in a time slot T_{K} one of the channels₁₋ₙ for transmitting a modulated signal in the time slot Tₖ to the differential driver circuit (7).

7. The device according to claim 5, **characterized in that** outputs from multiple FM modulators (6) are connected to the inputs of the analog summing circuit (21) for forming an output signal to the driver circuit (7), a spectrum of the output signal contains contributions of all frequency components of each of the FM modulator (6).

8. The device according to claim 5, **characterized in that** each FM modulator (6) represents a channel₁₋ₙ, wherein to each channel₁₋ₙ is assigned a separate central reference frequency f₁₋ₙ.

9. The device according to claim 1, **characterized in that** the stationary receiver electronic module (4) further comprises a signal reception circuit (15) for analog processing of the signal received by the pair of receiving electrodes (14); a circuitry (16) for analog and / or digital processing of the modulated signal and for decoding the information about the measured physical quantities from the processed signal; and a circuit (17) for sending information about the measured physical quantities to external systems.

10. The device according to claim 1, **characterized in that** the stationary electronic receiver module (4) includes one or more electromagnets with AC excitation as a magnetic field source (18) for supplying power to the electronic measurement module (3).

11. The device according to claim 1, **characterized in that** the stationary electronic receiver module (4) includes one or more permanent magnets or electromagnets with DC excitation as the magnetic field source (18) for supplying power to the electronic measurement module (3).

12. The device according to claim 1, **characterized in that** a transformer (13) is arranged between the one or more receiving coils (9) for collecting the energy from the magnetic field and the DC-DC converter (12), and the transformer (13) is configured to raise a voltage value when the one or more receiving coils (9) cannot directly provide a sufficiently high voltage for the DC-DC converter (12) operation.

13. The device according to claim 1, **characterized in that** the rotating mechanical element (1) is a dry clutch rotating part, a disc brake, a rotating vehicle wheel, a rotating shaft or any rotating mechanical element (1) supported in a stator.

14. The device according to claim 1, **characterized in that** the sensors₁₋ₙ (2) are selected from the group consisting of sensors for measuring temperature, strain, deformations, vibrations, or any combination thereof.

## Patentansprüche

1. Vorrichtung zum Messen physikalischer Größen eines rotierenden mechanischen Elements (1), die aus einer elektronischen Messmodul (3) und ein empfangendes stationären Elektronikmodul (4) umfasst, wobei das Signal und die Energie zwischen der elektronischen Messmodul (3) und das empfangende stationäre Elektronikmodul (4) kontaktlos übertragen werden; dabei erfolgt die kontaktlose Signalübertragung durch kapazitive Kopplung und die kontaktlose Energieübertragung durch induktive Kopplung, wobei das empfangende stationäre Elektronikmodul (4), in Bezug auf welchen die elektronische Messmodul (3) so konfiguriert ist dass sie sich um ihn dreht, aus einer oder mehreren Magnetfeldquellen (18) für kontaktlose Energieübertragung besteht;
wobei die elektronische Messmodul (3) so konfiguriert ist, dass sie an den drehbaren mechanischen Element (1) angeschlossen und für die Verarbeitung der Signale von einem oder mehreren Sensorenn₁₋ₙ (2) angepasst ist, welche so konfiguriert sind, dass sie an den drehbaren mechanischen Element angeschlossen sind (1), wobei diese Sensoren₁₋ₙ (2) mit der elektronischen Messmodul (3) verknüpfbar sind, und die elektronische Messmodul (3) eine Netzteilschaltung (10) hat, die zur Stromversorgung die Sensoren₁₋ₙ (2) und des Schaltkreises der elektronischen Messmodul (3) angepasst ist, sowie zur Stromversorgung einer oder mehreren Empfangsspulen (9), die über ihre Klemmen zur Netzteilschaltung (10) verknüpft sind,
**gekennzeichnet dadurch,**
**dass** die elektronische Messmodul (3) aus zwei Sendelektroden (8) besteht, die für differentielle kapazitive Signalübertragung angepasst sind, wobei das empfangende stationäre Elektronikmodul (4) aus zwei Empfangselektroden (14) besteht, die für differentiellen kapazitiven Signalempfang angepasst sind, und zwar Empfang des Signals, das von den zwei Sendeelektroden (8) gesendet wird, wobei die kontaktlose Signal- und Energieübertragung periodisch erfolgt, und zwar im Zeitintervall Tₘⱼ der Rotationszeit, in welcher die elektronische Messmodul (3) und das empfangende stationäre Elektronikmodul (4) in der Nähe zueinander sind und die eine oder mehrere Empfangsspulen (9) und die zwei Sendeelektroden (8) in der Nähe von den zwei Empfangselektroden (14) und der Magnetfeldquelle (18) sind; die Netzteilschaltung (10) besteht weiter aus einem Kondensator (11), der zur Einlagerung des während einer Rotation gesammelten Energieüberschusses und zur Stromversorgung der Sensoren₁₋ₙ (2) und des Schaltkreises der elektronischen Messmodul (3) während des Zeitintervalls, wenn die elektronische Messmodul (3) und das empfangende stationäre Elektronikmodul (4) nicht in der Nähe zueinander sind, konfiguriert ist.

2. Vorrichtung nach Anspruch 1, **dadurch gekennzeichnet, dass** die elektronische Messmodul (3) so angepasst ist, dass sie an die Oberfläche des rotierenden mechanischen Elements (1) oder in die vorbestimmte Öffnung im rotierenden mechanischen Element (1) angeschlossen werden kann.

3. Vorrichtung nach Anspruch 1, **dadurch gekennzeichnet, dass** die elektronische Messmodul (3) weiter einen oder mehrere FM-Modulatoren enthält (6), eine Differential-Treiberschaltung (7) zur Kontrolle der zwei Sendeelektroden (8) für Signalübertragung mittels differentieller kapazitiver Kopplung, wobei das Signal durch differentielle kapazitive Kopplung mittels zwei Elektroden (8) und (14) übertragen wird, zwischen welchen Kapazitäten C₁₁ und C₂₂ bestehen, wenn die Module (3) und (4) im Zeitintervall Tₘⱼ einander nahe sind, wobei die genannten Sendeelektroden (8) mit einem Differentialsignal getrieben werden, das die Messangaben von Sensoren₁₋ₙ (2) enthält, und zwar in Form eines FM-modulierten Signals, zum Empfang von welchen der empfangende stationäre Elektronikmodul (4) angepasst ist.

4. Vorrichtung nach Anspruch 1, **dadurch gekennzeichnet, dass** die Netzteilschaltung (10) weiter einen DC/DC-Wandler (12), die Komponenten zur Wandlung der Wechselspannung von einer oder mehreren Empfangsspulen (9) in die für den Betrieb des DC/DC-Wandlers (12) notwendige Gleichspannung enthält.

5. Vorrichtung nach Anspruch 3, **dadurch gekennzeichnet, dass** die elektronische Messmodul (3) einen Multiplexer (19) oder eine summierende Analogschaltung (21) enthält, wobei jedes Output von einem oder mehreren FM-Modulatoren (6) mit den Inputs vom Multiplexer (19) oder mit den Inputs von der summierenden Analogschaltung (21) verknüpft ist, oder jeder der Sensoren₁₋ₙ (2) mit einem separaten FM-Modulator (6) mit einem analogen Multiplexer (19) verknüpft wird.

6. Vorrichtung nach Anspruch 5, **dadurch gekennzeichnet, dass** die elektronische Messmodul (3) eine Zeitgeberschaltung (20) enthält, die Zeitgeberschaltung (20) ist mit dem Multiplexer (19) verknüpft, um im Zeitschlitz T_{K} einen der Kanäle₁₋ₙ zur Sendung des modulierten Signals zum Differentialtreiberschaltung (7) im Zeitschlitz T_{K} zu wählen.

7. Vorrichtung nach Anspruch 5, **dadurch gekennzeichnet, dass** die Outputs von den mehrfachen FM-Modulatoren (6) mit den Inputs der summierenden Analogschaltung (21) verknüpft sind, um ein Output-Signal zur Treiberschaltung (7) herzustellen; das Spektrum des Output-Signals enthält Sendungen von allen Frequenzkomponenten von jedem der FM-Modulatoren (6).

8. Vorrichtung nach Anspruch 5, **dadurch gekennzeichnet, dass** jeder FM-Modulator (6) einen Kanal₁₋ₙ darstellt, wobei jedem Kanal₁₋ₙ eine separate zentrale Bezugsfrequenz f₁₋ₙ zugeordnet ist.

9. Vorrichtung nach Anspruch 1, **dadurch gekennzeichnet, dass** das empfangende stationäre Elektronikmodul (4) weiters eine Signalempfang-Schaltung (15) für analoge Bearbeitung des durch die Empfangselektroden (14) empfangenen Signals, ein Schaltkreis (16) für analoge und/oder digitale Bearbeitung des modulierten Signals und Dekodierung der Informationen über die gemessenen physikalische Größen vom bearbeiteten Signal und einen Schaltkreis (17) zur Absendung der Informationen über die gemessenen physikalische Größen an die externen Systeme enthält.

10. Vorrichtung nach Anspruch 1, **dadurch gekennzeichnet, dass** das empfangende stationäre Elektronikmodul (4) einen oder mehrere Elektromagnete mit Wechselstromerregung als Magnetfeldquelle (18) zur Stromversorgung für die elektronische Messmodul (3) enthält.

11. Vorrichtung nach Anspruch 1, **dadurch gekennzeichnet, dass** das empfangende stationäre Elektronikmodul (4) einen oder mehrere Dauermagnete oder Elektromagnete mit Gleichstromerregung als Magnetfeldquelle (18) zur Stromversorgung für die elektronische Messmodul (3) enthält.

12. Vorrichtung nach Anspruch 1, **dadurch gekennzeichnet, dass** ein Transformator (13) zwischen einer oder mehreren Empfangsspulen (9) zur Stromsammlung vom Magnetfeld und den DC/DC-Wandler (12) angebracht ist, und der Transformator (13) ist so konfiguriert, dass den Spannungswert anhebt, wenn eine oder mehrere Empfangsspulen (9) eine für den Betrieb des DC/DC-Wandlers (12) genügend hohe Spannung nicht direkt liefern kann.

13. Vorrichtung nach Anspruch 1, **dadurch gekennzeichnet, dass** das rotierende mechanische Element (1) eine drehbare Trockenkupplung, eine Bremsscheibe, ein drehbares Fahrzeugrad, eine drehbare Welle, oder irgendein anderes im Stator unterstütztes rotierendes mechanisches Element (1) ist.

14. Vorrichtung nach Anspruch 1, **dadurch gekennzeichnet, dass** die Sensoren₁₋ₙ (2) aus einer Gruppe der Sensoren zur Messung der Temperatur, Dehnung, Deformierung, Vibrationen oder jegliche Kombination davon gewählt werden.

## Revendications

1. Un dispositif de mesure des quantités physiques d'un élément mécanique rotatif (1), le dispositif comprenant un module électronique de mesure (3) ainsi qu'un module électronique stationnaire de réception (4), où la transmission du signal et d'énergie entre le module électronique de mesure (3) et le module électronique stationnaire de réception (4) est assurée par une transmission sans contact, où ladite transmission sans contact de signal s'effectue par couplage capacitif et la transmission sans contact d'énergie par couplage inductif, où le module électronique stationnaire de réception (4) autour duquel le module électronique de mesure (3) est configuré à tourner, comprend une ou plusieurs sources de champ magnétique (18) pour une transmission d'énergie sans contact ;
où le module électronique de mesure (3) est configuré de façon à être attaché à l'élément mécanique rotatif (1) et adapté de sorte à traiter des signaux émanant d'un ou plusieurs senseurs₁₋ₙ (2) configuré de façon à être attaché à l'élément mécanique rotatif (1), où lesdits senseurs₁₋ₙ (2) peuvent être raccordés au module électronique de mesure (3), le module électronique de mesure (3) disposant d'un circuit d'alimentation électrique (10) adapté de sorte à fournir de l'énergie aux senseurs₁₋ₙ (2) ainsi qu'à un système de circuits du module électronique de mesure (3) et d'une ou de plusieurs bobines réceptrices (9) branchées au circuit d'alimentation électrique (10) grâce à leurs bornes,
**caractérisé en ce que**
le module électronique de mesure (3) comprend une paire d'électrodes de transmission (8) adaptées à une transmission capacitive différentielle de signal, où le module électronique stationnaire de réception (4) comprend une paire d'électrodes réceptrices (14) adaptées à une réception capacitive différentielle de signal d'un signal émis par la paire d'électrodes de transmission (8), où la transmission sans contact de signal et d'énergie a lieu périodiquement dans un intervalle de temps Tₘⱼ d'une période de rotation durant laquelle le module électronique de mesure (3) et le module électronique stationnaire de réception (4) sont à proximité, tandis que la ou les bobines réceptrices (9) et la paire d'électrodes de transmission (8) sont à proximité avec la paire d'électrodes réceptrices (14) ainsi que la source de champ magnétique (18). Le circuit d'alimentation électrique (10) comprend, par ailleurs, un condensateur (11) configuré pour le stockage de surplus d'énergie recueillie au cours d'une rotation et pour la fourniture d'énergie aux senseurs₁₋ₙ (2) et le système de circuits du module électronique de mesure (3) durant un intervalle de temps quand le module électronique de mesure (3) et le module électronique stationnaire (4) ne sont pas à proximité immédiate.

2. Dispositif selon la revendication 1, **caractérisé en ce que** le module électronique de mesure (3) est adapté de manière à être attaché à une surface de l'élément mécanique rotatif (1) ou dans un orifice prédéfini, prévu dans l'élément mécanique rotatif (1).

3. Dispositif selon la revendication 1, **caractérisé en ce que** le module électronique de mesure (3) comprend, en outre, un ou plusieurs modulateurs FM (6), un circuit de commande différentielle (7) pour le contrôle de la paire d'électrodes de transmission (8) pour la transmission de signal par couplage capacitif différentiel, où la transmission de signal s'effectue par couplage capacitif différentiel par l'usage d'une paire d'électrodes (8) et (14) entre lesquelles les capacités C₁₁ et C₂₂ sont présentes lorsque les modules (3) et (4) sont à proximité dans l'intervalle de temps Tₘⱼ, où ladite paire d'électrodes de transmission (8) est commandée par un signal différentiel lequel contient les renseignements de mesure provenant des senseurs₁₋ₙ (2) sous la forme d'un signal modulé FM que le module électronique stationnaire de réception (4) est adapté à recevoir.

4. Dispositif selon la revendication 1, **caractérisé en ce que** le circuit d'alimentation électrique (10) comprend également un convertisseur continu-continu (12), des composants destinés à la conversion de la tension de courant alternatif de l'une ou plusieurs bobines (9) à une tension de courant continu afin que le convertisseur continu-continu (12) puisse fonctionner.

5. Dispositif selon la revendication 3, **caractérisé en ce que** le module électronique de mesure (3) comprend un multiplexeur (19) ou un circuit de sommation analogique (21), où chaque sortie du ou des modulateurs FM (6) est branchée aux entrées du multiplexeur (19) ou à celles du circuit de sommation analogique (21) ou où chacun des senseurs₁₋ₙ (2) est branché à un modulateur FM particulier (6) à travers un multiplexeur analogique (19).

6. Dispositif selon la revendication 5, **caractérisé en ce que** le module électronique de mesure (3) comprend un circuit de temporisation (20), le circuit de temporisation (20) étant branché au multiplexeur (19) afin de sélectionner dans un intervalle de temps T_{K} l'un des canaux₁₋ₙ pour la transmission d'un signal modulé dans l'intervalle de temps Tₖ au circuit de commande différentielle (7).

7. Dispositif selon la revendication 5, **caractérisé en ce que** les sorties issues des multiples modulateurs FM (6) sont branchées aux entrées du circuit de sommation analogique (21) afin de former un signal de sortie au circuit de commande (7), un spectre du signal de sortie renferme des contributions de tous les composants de fréquence de chacun des modulateurs FM (6).

8. Dispositif selon la revendication 5, **caractérisé en ce que** chaque modulateur FM (6) représente un canal₁₋ₙ où chacun des canaux se voit attribuer sa propre fréquence de référence centrale f₁₋ₙ.

9. Dispositif selon la revendication 1, **caractérisé en ce que** le module électronique stationnaire de réception (4) comprend également un circuit de réception de signal (15) pour le traitement analogique du signal reçu par la paire d'électrodes réceptrices (14) ; un système de circuits (16) pour le traitement analogique et/ou numérique du signal modulé ainsi que pour le décodage de l'information sur les quantités physiques mesurées issues du signal traité ; et un circuit (17) pour l'envoi d'information sur les quantités physiques mesurées aux systèmes externes.

10. Dispositif selon la revendication 1, **caractérisé en ce que** le module électronique stationnaire de réception (4) inclut un ou plusieurs électroaimants d'excitation à courant alternatif en tant que source de champ magnétique (18) pour l'alimentation électrique du module électronique de mesure (3).

11. Dispositif selon la revendication 1, **caractérisé en ce que** le module électronique stationnaire de réception (4) inclut un ou plusieurs aimants permanents ou électro-aimants d'excitation à courant continu en tant que source de champ magnétique (18) pour l'alimentation électrique du module électronique de mesure (3).

12. Dispositif selon la revendication 1, **caractérisé en ce que** le transformateur (13) est prévu entre une ou plusieurs bobines réceptrices (9) pour la collecte d'énergie issue du champ magnétique et du convertisseur CC-CC (12), et le transformateur (13) est configuré de façon à augmenter une valeur de tension lorsqu'une ou plusieurs bobines réceptrices (9) ne sont pas en mesure de fournir directement une tension suffisamment élevée pour le fonctionnement du convertisseur CC-CC (12).

13. Dispositif selon la revendication 1, **caractérisé en ce que** l'élément mécanique rotatif (1) est une pièce tournante d'embrayage sec, un frein à disques, une roue tournante de véhicule, un arbre tournant ou tout autre élément mécanique rotatif (1) supporté dans un stator.

14. Dispositif selon la revendication 1, **caractérisé en ce que** les senseurs₁₋ₙ (2) sont sélectionnés à partir du groupe composé de senseurs destinés à mesurer la température, l'effort, les déformations, les vibrations ou toute autre combinaison de ces éléments.
